# EUROPÄISCHE PATENTSCHRIFT

(11) **EP 4 013 221 B1**
(45) Veröffentlichungstag und Bekanntmachung des Hinweises auf die Patenterteilung: **07.06.2023**
(21) Anmeldenummer: 21709869.8
(22) Anmeldetag: 10.03.2021
(51) Int. Cl.: A01K 15/02

(54) **VORRICHTUNG UND VERFAHREN FÜR DIE RIECHAUSBILDUNG EINES TIERS**
APPARATUS AND METHOD FOR SCENT TRAINING AN ANIMAL
APPAREIL ET MÉTHODE POUR LE DRESSAGE OLFACTIF D'UN ANIMAL

(30) Priorität: 13.03.2020 DE 102020107060
(43) Veröffentlichungstag der Anmeldung: 22.06.2022
(73) Patentinhaber: Ebbers, Hans, 48477 Hörstel (DE)
(72) Erfinder: EBBERS, Janek, 48477 Hörstel (DE)
(74) Vertreter: Geskes, Christoph
(86) Internationale Anmeldenummer: PCT/EP2021/056063
(87) Internationale Veröffentlichungsnummer: WO 2021/180793

(56) Entgegenhaltungen:
- EP-A1- 2 498 238
- WO-A1-2019/115983
- CN-U- 202 456 062

## Beschreibung

Die Erfindung betrifft eine Vorrichtung und ein Verfahren für die Riechausbildung eines Tiers, insbesondere für die Riechausbildung von Hunden, Katzen, Schweinen, Affen, Riesenhamsterratten oder Ratten.

Im Rahmen der vorliegenden Erfindung ist mit der Verwendung des Begriffs "ungefähr" in Bezug auf einen Wert oder Wertbereich ein Toleranzbereich gemeint, den ein Fachmann als üblich für diesen Wert oder Wertbereich erachtet und der insbesondere ±10 %, bevorzugt ±5 % und weiter bevorzugt ±2 % beträgt, und mit der Verwendung des Begriffs "im Wesentlichen" in Bezug auf eine Eigenschaft ist ein Toleranzbereich gemeint, der für den Fachmann unter wirtschaftlichen und technischen Gesichtspunkten insoweit vertretbar ist, dass diese Eigenschaft noch als solche zu erkennen ist.

US 8 776 731 B1 beschreibt ein Geruchserkennungs-Trainingssystem zur Verwendung beim Trainieren eines Tieres, einen gewünschten Geruch zu erkennen. Das System umfasst mehrere Verleittrainingsgehäuse und ein Zielgeruchsgehäuse, das einen gewünschten Trainingsgeruch enthält. Die Gehäuse sind jeweils visuell identisch. Die Gehäuse befinden sind an verschiedenen Stellen und sind so konfiguriert, dass sie von einem Zaun in verschiedenen Höhen gehalten werden. Die Gehäuse sind lösbar an dem Zaun befestigt. Das Zielgeruchsgehäuse ist so konfiguriert, dass es eine Geruchsquelle innerhalb eines Geruchslagerbereichs und eine Belohnung innerhalb eines Belohnungslagerbereichs aufnimmt, und umfasst eine Geruchsrückhaltezone, die neben und in fluidischer Verbindung mit dem Geruchslagerbereich steht. Zusätzlich ist ein Belohnungsabgabesystem, das mit dem Zielgeruchsgehäuse assoziiert ist, durch den Trainer fernbedienbar, um die Belohnung direkt in die Geruchsrückhaltezone abzugeben. Der Geruchslagerbereich ist ein Hohlraum innerhalb des Zielgeruchsgehäuses, der an die Geruchsrückhaltezone grenzt und von dieser durch eine Schiebetür physisch getrennt ist. Die Verwendung der Schiebetür erleichtert das einfache Platzieren der Geruchsquelle innerhalb des Geruchslagerbereichs und dient dazu, das Tier visuell und physisch von der Geruchsquelle abzuschirmen. Um die Geruchsrückhaltezone mit dem Geruchslagerbereich fluidisch zu verbinden, enthält die Tür viele Öffnungen. Das Belohnungsabgabesystem umfasst eine Struktur, die mit dem Zielgeruchsgehäuse assoziiert ist und die fernbedienbar ist, um mit dem Belohnungslagerbereich zusammenzuarbeiten, um die Belohnung darin in die Geruchsrückhaltezone abzugeben. Das Auslösesystem ist eine Kombination aus einer Batterie, einem Empfänger, einem Relais und einer magnetischen Verriegelung. Der Empfänger kann durch einen Fernsteuerungssender fernbedient werden. Im Betrieb wird der Sender vom Trainer betätigt, um den Empfänger zu aktivieren und dadurch das Relais zu betätigen, um die Magnetverriegelung zu steuern, die mit einem Metallstreifen an einer Falltür zusammenwirkt, um die Falltür freizugeben und die Belohnung in die Geruchsrückhaltezone fallen zu lassen. Falls zwei oder mehr der Zielgeruchsgehäuse verwendet werden, ist der Sender so konfiguriert, dass der Trainer das Zielgeruchsgehäuse auswählen kann, das er zum entsprechenden Zeitpunkt aktivieren möchte.

WO 2019/115 983 A1 offenbart eine Geruchstrainingsvorrichtung zum Trainieren von Tieren, um Gerüche zu erkennen. Diese Geruchstrainingsvorrichtung umfasst ein Karussell, ein Computersystem und ein Nagetiergehäuse. Das Karussell umfasst Mittel zum Halten mehrerer Geruchsprobengefäße an mehreren Geruchsprobenpositionen und in einer Ausrichtung zur Aufnahme von Flüssigkeitsproben. Das Karussell ist um eine Karussellachse drehbar, um eine vom Benutzer ausgewählte Geruchsprobenposition an einer vorbestimmten Präsentationsposition bereitzustellen. Das Nagetiergehäuse weist ein Probenfenster auf, das so angeordnet ist, dass es sich an der vorbestimmten Präsentationsposition befindet. Die Vorrichtung umfasst Mittel zum Bedecken mehrerer Geruchsprobentöpfe und Mittel zum Freilegen eines Geruchsprobentopfes an dem Probenfenster, so dass eine Probe an dem Probenfenster präsentiert werden kann, während ein Tier auf ihren Geruch trainiert wird. Das Computersystem ist so programmiert, dass es die Geruchstrainingsvorrichtung steuert.

Vor diesem Hintergrund schlägt die Erfindung die Gegenstände der unabhängigen Ansprüche vor. Vorteilhafte Ausführungsformen der Erfindung sind in den abhängigen Ansprüchen beschrieben.

Die Erfindung schlägt gemäß einem ersten Aspekt eine Vorrichtung für die Riechausbildung eines Tiers vor, umfassend
- ein Gehäuse mit einer Frontplatte, in der wenigstens zwei Riechöffnungen ausgebildet sind;
- zu jeder Riechöffnung wenigstens einen Sensor;
- wenigstens einen verschließbaren Zielgeruchsbehälter zur Aufnahme eines Zielgeruchsstoffes;
- eine Koppeleinrichtung für den wenigstens einen Zielgeruchsbehälter;
- eine Belohnungseinrichtung zum Ausgeben einer Belohnung für das Tier;
- eine Steuereinrichtung, die an die Sensoren, die Koppeleinrichtung und die Belohnungseinrichtung gekoppelt ist;
wobei
- jeder Sensor derart ausgebildet ist, dass er
   - überwachen kann, ob das Tier seine Nase in die jeweilige Riechöffnung steckt, und
   - solange dies der Fall ist, ein entsprechendes Meldesignal an die Steuereinrichtung sendet;
- die Koppeleinrichtung derart ausgebildet ist, dass sie
   - einen Schließzustand einnehmen kann, in dem der wenigstens eine Zielgeruchsbehälter verschlossen ist, und
   - wenigstens einen Koppelzustand einnehmen kann, in dem wenigstens ein vorbestimmter Zielgeruchsbehälter geöffnet und an wenigstens eine vorbestimmte Riechöffnung fluidisch gekoppelt ist;
- die Steuereinrichtung derart ausgebildet ist, dass sie
   - die Koppeleinrichtung und die Belohnungseinrichtung in Abhängigkeit von den Meldesignalen und/oder gemäß einem vorbestimmten Programm ansteuern kann.

Gemäß einem zweiten Aspekt, auf den kein unabhängiger Anspruch gerichtet ist, wird eine Verwendung einer Vorrichtung, die gemäß dem ersten Aspekt ausgebildet ist, für die Riechausbildung eines Tiers vorgeschlagen.

Die Erfindung schlägt gemäß einem dritten Aspekt ein Verfahren für die Riechausbildung eines Tiers vor, wobei
- in einem Schritt a
   - ein Gehäuse mit einer Frontplatte, in der wenigstens zwei Riechöffnungen ausgebildet sind, bereitgestellt wird, und
   - wenigstens ein verschließbarer Zielgeruchsbehälter zur Aufnahme eines Zielgeruchsstoffes bereitgestellt wird;
- in einem Schritt b in den wenigstens einen Zielgeruchsbehälter ein Zielgeruchsstoff eingefüllt wird;

- in einem Schritt c ein Schließzustand hergestellt wird, in dem der wenigstens eine Zielgeruchsbehälter verschlossen ist;
- in einem Schritt d nach dem Schritt c ein Koppelzustand hergestellt wird, in dem wenigstens ein vorbestimmter Zielgeruchsbehälter geöffnet und an wenigstens eine vorbestimmte Riechöffnung fluidisch gekoppelt ist;
- in einem Schritt e nach dem Schritt d für die wenigstens einen gekoppelte Riechöffnung
   - überwacht wird, ob das Tier seine Nase in die jeweilige Riechöffnung steckt, und
   - solange dies der Fall ist, ein entsprechendes Meldesignal erzeugt wird;
- in einem Schritt f nach dem Schritt e das Tier in Abhängigkeit von den Meldesignalen belohnt und optional ein vorbestimmtes Signal für das Tier erzeugt wird.

Gemäß einem vierten Aspekt, auf den kein unabhängiger Anspruch gerichtet ist, werden Daten vorgeschlagen, die mit Hilfe oder unter Verwendung einer Vorrichtung, die gemäß dem ersten Aspekt ausgebildet ist, und/oder mit Hilfe oder unter Verwendung eines Verfahrens, das gemäß dem dritten Aspekt ausgebildet ist, erzeugt worden sind. Gemäß einem fünften Aspekt, auf den kein unabhängiger Anspruch gerichtet ist, wird ein Datenspeicher vorgeschlagen, in dem Daten, die gemäß dem vierten Aspekt ausgebildet sind, gespeichert sind.

Die Erfindung ermöglicht eine verbesserte Riechausbildung von Tieren, da subjektive Einflüsse durch einen Trainer, wie sie bei Verwendung des aus US 8 776 731 B1 bekannten Geruchserkennungs-Trainingssystems auftreten können, vermieden oder zumindest verringert werden.

Die Frontplatte kann nach Bedarf auf beliebige Weise ausgebildet sein, beispielsweise derart, dass in ihr genau zwei Riechöffnungen oder wenigstens eine zusätzliche Riechöffnung ausgebildet ist. Jede Riechöffnung kann nach Bedarf auf beliebige Weise ausgebildet sein, beispielsweise derart, dass sie kreisförmig oder oval ist, und/oder dass ihre Größe und Form an die Nase des Tiers angepasst sind. Vorzugsweise sind die Riechöffnungen untereinander gleich.

Die Vorrichtung kann nach Bedarf auf beliebige Art und Weise ausgebildet sein, beispielsweise derart, dass sie genau einen Zielgeruchsbehälter oder wenigstens einen zusätzlichen Zielgeruchsbehälter und/oder zu jeder Riechöffnung genau einen Sensor oder wenigstens einen zusätzlichen Sensor umfasst. Bei Betrieb der Vorrichtung können die Zielgeruchsbehälter unterschiedliche Zielgeruchsstoffe enthalten, es ist aber auch möglich, dass wenigstens zwei Zielgeruchsbehälter den gleichen Zielgeruchsstoff enthalten. Jeder Sensor kann nach Bedarf auf beliebige Weise ausgebildet sein, beispielsweise als eine Lichtschranke oder eine IR-Lichtschranke oder ein Wärmesensor oder ein Näherungssensor oder ein optischer, akustischer, induktiver oder kapazitiver Näherungssensor oder ein Ultraschall-Näherungssensor oder ein Hall-Sensor.

Die Koppeleinrichtung kann nach Bedarf auf beliebige Weise ausgebildet sein, beispielsweise derart, dass sie genau einen Koppelzustand oder wenigstens einen zusätzlichen Koppelzustand einnehmen kann.

Im Rahmen der vorliegenden Erfindung ist mit dem Ausdruck "fluidisch gekoppelt" ein Kopplung über eine Fluidleitung gemeint. Vorzugsweise umfasst die Fluidleitung wenigstens ein Rohr und/oder wenigstens einen Schlauch und/oder wenigstens einen Kanal, der in einem Bauteil ausgebildet ist, und/oder wenigstens eine Durchgangsbohrung.

Jeder Koppelzustand kann nach Bedarf auf beliebige Weise ausgebildet sein, beispielsweise derart, dass in ihm gemäß einer ersten Option genau ein Zielgeruchsbehälter geöffnet und an genau eine oder wenigstens zwei Riechöffnungen fluidisch gekoppelt ist, und/oder dass in ihm gemäß einer zweiten Option wenigstens zwei Zielgeruchsbehälter geöffnet und gemeinsam an genau eine oder wenigstens zwei Riechöffnungen fluidisch gekoppelt sind, und/oder dass in ihm gemäß einer dritten Option wenigstens zwei Zielgeruchsbehälter geöffnet sind und jeder dieser Zielgeruchsbehälter an genau eine oder wenigstens zwei Riechöffnungen fluidisch gekoppelt ist. Gemäß der ersten Option ist beispielhaft ein Zielgeruchsbehälter Z1 ausschließlich an eine Riechöffnung Ö1 oder zwei Riechöffnungen Ö1 und Ö2 fluidisch gekoppelt. Gemäß der zweiten Option sind beispielhaft zwei Zielgeruchsbehälter Z1 und Z2 gemeinsam ausschließlich an eine Riechöffnung Ö1 oder zwei Riechöffnungen Ö1 und Ö2 fluidisch gekoppelt, sodass Z1 an Ö1 und auch Z2 an Ö1 gekoppelt ist oder Z1 an Ö1 und Ö2 und auch Z2 an Ö1 und Ö2 gekoppelt ist. Gemäß der dritten Option ist beispielhaft ein Zielgeruchsbehälter Z1 ausschließlich an eine Riechöffnung Ö1 oder zwei Riechöffnungen Ö1 und Ö2 fluidisch gekoppelt, und ist ein Zielgeruchsbehälter Z2 ausschließlich an eine Riechöffnung Ö3 oder zwei Riechöffnungen Ö3 und Ö4 fluidisch gekoppelt, sodass Z1 an Ö1 und Z2 an Ö3 gekoppelt ist oder Z1 an Ö1 und Z2 an Ö3 und Ö4 gekoppelt ist oder Z1 an Ö1 und Ö2 und Z2 an Ö3 gekoppelt ist oder Z1 an Ö1 und Ö2 und Z2 an Ö3 und Ö4 gekoppelt ist.

Bei einer Ausführungsform der Erfindung ist spezifiziert, dass
- die Koppeleinrichtung derart ausgebildet ist, dass sie wenigstens zwei Koppelzustände einnehmen kann;
- das Programm umfasst, dass die Steuereinrichtung
   - einen der Koppelzustände auswählt;
   - zu einem vorbestimmten ersten Zeitpunkt eine erste Zeitmessung startet und die Koppeleinrichtung derart ansteuert, dass die Koppeleinrichtung den ausgewählten Koppelzustand einnimmt;
   - die erste Zeitmessung stoppt und gleichzeitig eine zweite Zeitmessung startet, sobald die Steuereinrichtung von einem der Sensoren, die dem wenigstens einen gekoppelten Zielgeruchsbehälter zugeordnet sind, das Meldesignal empfängt;
   - die zweite Zeitmessung stoppt, sobald die Steuereinrichtung von diesem Sensor das Meldesignal nicht mehr empfängt;
   - falls die Dauer der zweiten Zeitmessung einen vorbestimmten Schwellenwert überschreitet, zu einem vorbestimmten zweiten Zeitpunkt nach dem Stoppen der zweiten Zeitmessung die Belohnungseinrichtung derart ansteuert, dass die Belohnungseinrichtung eine vorbestimmte Belohnung ausgibt.

Andernfalls, also falls die Dauer der zweiten Zeitmessung den Schwellenwert nicht überschreitet, wird keine Belohnung ausgegeben. Die Dauer der ersten Zeitmessung gibt an, wie lange das Tier benötigt hat, um den jeweiligen gekoppelten Zielgeruchsbehälter beziehungsweise den darin enthaltenen Zielgeruchsstoff zu erkennen. Die Dauer der zweiten Zeitmessung gibt an, wie lange das Tier seine Nase in die jeweilige gekoppelte Riechöffnung gesteckt hat. Das Überschreiten des Schwellenwerts dient als Hinweis darauf, dass das Tier den jeweiligen Zielgeruchsstoff erkannt hat. Der Schwellenwert kann nach Bedarf auf beliebige Weise ausgewählt sein, beispielsweise derart, dass er ungefähr 0,5 s, ungefähr 0,6 s, ungefähr 0,7 s, ungefähr 0,8 s, ungefähr 0,9 s, ungefähr 1,0 s, ungefähr 1,1 s, ungefähr 1,2 s, ungefähr 1,3 s, ungefähr 1,4 s, ungefähr 1,5 s, ungefähr 1,6 s, ungefähr 1,7 s, ungefähr 1,8 s, ungefähr 1,9 s oder ungefähr 2,0 s beträgt. Diese erste Zeitspanne kann nach Bedarf auf beliebige Weise ausgewählt sein, beispielsweise derart, dass sie ungefähr 0,5 s, ungefähr 0,6 s, ungefähr 0,7 s, ungefähr 0,8 s, ungefähr 0,9 s, ungefähr 1,0 s, ungefähr 1,1 s, ungefähr 1,2 s, ungefähr 1,3 s, ungefähr 1,4 s, ungefähr 1,5 s, ungefähr 1,6 s, ungefähr 1,7 s, ungefähr 1,8 s, ungefähr 1,9 s oder ungefähr 2,0 s beträgt.

Das Auswählen des Koppelzustands kann nach Bedarf auf beliebige Weise erfolgen, beispielsweise mit Hilfe eines Zufallszahlengenerators und/oder einer vorbestimmten Tabelle.

Das Ausgeben der Belohnung kann nach Bedarf auf beliebige Weise erfolgen, beispielsweise derart, dass ein Spielzeug, wie beispielsweise ein Ball, und/oder ein Leckerli oder ein Futterbröckchen ausgegeben oder ausgeworfen wird.

Jedes Bestimmen eines Zeitpunktes kann nach Bedarf auf beliebige Weise erfolgen, beispielsweise mit Hilfe eines Zufallszahlengenerators und/oder einer vorbestimmten Tabelle. Vorzugsweise umfasst die Steuereinrichtung den Zufallszahlengenerator und/oder einen Datenspeicher, in dem die Tabellen gespeichert sind.

Vorzugsweise umfasst die Steuereinrichtung eine Stoppuhr oder eine Zeitmesseinrichtung, mit deren Hilfe die Zeitmessungen erfolgen.

Bei einer Ausführungsform der Erfindung ist spezifiziert, dass die Vorrichtung umfasst
- eine Signaleinrichtung zum Erzeugen eines Signals für das Tier;
wobei
- die Steuereinrichtung an die Signaleinrichtung gekoppelt ist;
- die Steuereinrichtung derart ausgebildet ist, dass sie
   - die Signaleinrichtung in Abhängigkeit von den Meldesignalen und/oder gemäß dem Programm ansteuern kann.

Die Signaleinrichtung kann nach Bedarf auf beliebige Weise ausgebildet sein, beispielsweise derart, dass sie wenigstens eine Lampe und/oder wenigstens einen Lautsprecher und/oder wenigstens einen Vibrator umfasst. Die Signaleinrichtung ist beispielhaft an einem Halsband und/oder einem Geschirr des Tiers angebracht. Vorzugsweise umfasst das Signal ein akustisches Signal und/oder ein optisches Signal und/oder ein haptisches Signal. Das akustische Signal umfasst beispielsweise einen Klick, wie er mit einem beim Klickertraining verwendeten Klicker erzeugt wird, und/oder einen Pfiff, wie er mit einer Hundepfeife erzeugt wird. Das haptische Signal umfasst beispielsweise eine Vibration, die beispielhaft an einem Halsband und/oder einem Geschirr des Tiers erzeugt wird.

Bei einer Ausführungsform der Erfindung ist spezifiziert, dass das Programm umfasst, dass die Steuereinrichtung zu einem vorbestimmten dritten Zeitpunkt nach dem Stoppen der zweiten Zeitmessung die Signaleinrichtung derart ansteuert, dass die Signaleinrichtung ein vorbestimmtes Signal erzeugt. Dieses Signal kann dann später beim Feldeinsatz des Tiers anstelle einer Belohnung verwendet werden. Falls die Dauer der zweiten Zeitmessung den Schwellenwert nicht überschreitet oder falls die erste Zeitspanne nicht abgelaufen ist, wird dieses Signal nicht erzeugt.

Bei einer Ausführungsform der Erfindung ist spezifiziert, dass der dritte Zeitpunkt gleich dem zweiten Zeitpunkt ist oder eine vorbestimmte Zeitspanne vor oder nach dem zweiten Zeitpunkt liegt.

Diese Zeitspanne kann nach Bedarf auf beliebige Weise ausgewählt sein, beispielsweise derart, dass sie ungefähr 0,1 s, ungefähr 0,2 s, ungefähr 0,3 s, ungefähr 0,4 s, ungefähr 0,5 s, ungefähr 0,6 s, ungefähr 0,7 s, ungefähr 0,8 s, ungefähr 0,9 s oder ungefähr 1,0 s beträgt.

Bei einer Ausführungsform der Erfindung ist spezifiziert, dass das Programm umfasst, dass die Steuereinrichtung die Ergebnisse der Zeitmessungen abspeichert und optional den jeweiligen Sensoren zuordnet.

Bei einer Ausführungsform der Erfindung ist spezifiziert, dass das Programm umfasst, dass die Steuereinrichtung die erste Zeitmessung abbricht, sobald eine vorbestimmte zweite Zeitspanne abgelaufen ist, ohne dass die Steuereinrichtung von einem derjenigen Sensoren, die den gekoppelten Zielgeruchsbehältern zugeordnet sind, ein Meldesignal empfangen hat.

Dann ist bevorzugt spezifiziert, dass das Programm umfasst, dass die Steuereinrichtung das Abbrechen der ersten Zeitmessung abspeichert. Das Ablaufen der zweiten Zeitspanne dient als Hinweis darauf, dass das Tier keinen Zielgeruchsstoff erkannt hat.

Bei einer Ausführungsform der Erfindung ist spezifiziert, dass das Programm umfasst, dass die Steuereinrichtung die Koppeleinrichtung derart ansteuert, dass die Koppeleinrichtung vor dem ersten Zeitpunkt und/oder nach dem Stoppen der zweiten Zeitmessung und/oder nach dem Abbrechen der ersten Zeitmessung den Schließzustand einnimmt.

Bei einer Ausführungsform der Erfindung ist spezifiziert, dass die Steuereinrichtung derart ausgebildet ist, dass sie eine vorbestimmte Anzahl von Wiederholungen des Programms ausführt und/oder dass sie das Programm während einer vorbestimmten dritten Zeitspanne immer wieder ausführt.

Bei einer Ausführungsform der Erfindung ist spezifiziert, dass das Programm umfasst, dass die Steuereinrichtung bei jeder Wiederholung des Programms den Koppelzustand und/oder wenigstens einen der Zeitpunkte ändert.

Das Ändern des Koppelzustands und jedes Ändern eines Zeitpunktes kann nach Bedarf auf beliebige Weise erfolgen, beispielsweise mit Hilfe eines Zufallszahlengenerators und/oder einer vorbestimmten Tabelle.

Bei einer Ausführungsform der Erfindung ist spezifiziert, dass die Vorrichtung umfasst
- wenigstens eine Verschlussfläche für den wenigstens einen Zielgeruchsbehälter;
wobei
- der wenigstens eine Zielgeruchsbehälter eine verschließbare Zielgeruchsöffnung aufweist, die von einem Dichtrand umgeben ist;
- die Koppeleinrichtung eine Antriebseinrichtung für den wenigstens einen Zielgeruchsbehälter umfasst;
- die Antriebseinrichtung derart ausgebildet ist, dass sie
   - den wenigstens einen Zielgeruchsbehälter in eine erste Position bewegen kann, in der der jeweilige Dichtrand an der Verschlussfläche oder an einer der Verschlussflächen vollständig und/oder dichtend derart anliegt, dass die jeweilige Zielgeruchsöffnung verschlossen ist;
   - den wenigstens einen Zielgeruchsbehälter in eine zweite Position bewegen kann, in der die jeweilige Zielgeruchsöffnung und diejenigen Riechöffnungen, die gemäß dem ausgewählten Koppelzustand dieser Zielgeruchsöffnung zugeordnet sind, zumindest teilweise überlappen.

Jede dieser Verschlussflächen kann nach Bedarf auf beliebige Weise ausgebildet sein, beispielsweise an der Innenseite der Frontplatte.

Bei einer Ausführungsform der Erfindung ist spezifiziert, dass die Vorrichtung umfasst
- wenigstens einen Deckel mit einer Verschlussfläche für den wenigstens einen Zielgeruchsbehälter;
wobei
- der wenigstens eine Zielgeruchsbehälter eine verschließbare Zielgeruchsöffnung aufweist, die von einem Dichtrand umschlossen ist;
- die Koppeleinrichtung eine Antriebseinrichtung für den wenigstens einen Deckel umfasst;
- die Antriebseinrichtung derart ausgebildet ist, dass sie
   - den wenigstens einen Deckel in eine erste Position bewegen kann, in der die jeweilige Verschlussfläche an wenigstens einem der Dichtränder vollständig und/oder dichtend derart anliegt, dass die jeweilige Zielgeruchsöffnung verschlossen ist;
   - den wenigstens einen Deckel in eine zweite Position bewegen kann, in der die jeweilige Verschlussfläche an keinem der Dichtränder vollständig oder dichtend anliegt.

Bei einer Ausführungsform der Erfindung ist spezifiziert, dass in der zweiten Position eines dieser Deckel wenigstens eine derjenigen Zielgeruchsöffnungen, die gemäß dem ausgewählten Koppelzustand vorbestimmt sind, und diejenigen Riechöffnungen, die gemäß dem ausgewählten Koppelzustand diesen Zielgeruchsöffnungen zugeordnet sind, zumindest teilweise überlappen.

Die Vorrichtung kann nach Bedarf auf beliebige Art und Weise ausgebildet sein, beispielsweise derart, dass sie genau einen dieser Deckel oder wenigstens einen zusätzlichen Deckel umfasst. Jeder dieser Deckel kann nach Bedarf auf beliebige Weise ausgebildet sein, beispielsweise derart, dass er genau einem oder wenigstens einem der Zielgeruchsbehälter zugeordnet ist. Die Vorrichtung umfasst beispielsweise genau einen gemeinsamen Deckel für sämtliche Zielgeruchsbehälter zusammen, oder sie umfasst beispielsweise zu jedem Zielgeruchsbehälter einen eigenen Deckel.

Bei einer Ausführungsform der Erfindung ist spezifiziert, dass die Vorrichtung umfasst
- wenigstens einen verschließbaren Verleitgeruchsbehälter zur Aufnahme eines Verleitgeruchsstoffes;
wobei
- die Koppeleinrichtung eine Koppeleinrichtung für den wenigstens einen Verleitgeruchsbehälter ist;
- in dem Schließzustand der wenigstens eine Verleitgeruchsbehälter verschlossen ist;
- in dem Koppelzustand oder in wenigstens einem der Koppelzustände wenigstens ein vorbestimmter Verleitgeruchsbehälter geöffnet und an wenigstens eine vorbestimmte Riechöffnung fluidisch gekoppelt ist, und/oder in dem Koppelzustand oder in wenigstens einem der Koppelzustände wenigstens ein vorbestimmter Verleitgeruchsbehälter geöffnet und an wenigstens eine vorbestimmte Riechöffnung fluidisch gekoppelt ist und der wenigstens eine Zielgeruchsbehälter verschlossen ist.

Die Vorrichtung kann nach Bedarf auf beliebige Art und Weise ausgebildet sein, beispielsweise derart, dass sie genau einen Verleitgeruchsbehälter oder wenigstens einen zusätzlichen Verleitgeruchsbehälter umfasst. Bei Betrieb der Vorrichtung können die Verleitgeruchsbehälter unterschiedliche Verleitgeruchsstoffe enthalten, es ist aber auch möglich, dass wenigstens zwei Verleitgeruchsbehälter den gleichen Verleitgeruchsstoff enthalten.

Jeder Koppelzustand kann nach Bedarf auf beliebige Weise ausgebildet sein, beispielsweise derart, dass in ihm gemäß einer ersten Option genau ein Verleitgeruchsbehälter geöffnet und an genau eine oder wenigstens zwei Riechöffnungen fluidisch gekoppelt ist, und/oder dass in ihm gemäß einer zweiten Option wenigstens zwei Verleitgeruchsbehälter geöffnet und gemeinsam an genau eine oder wenigstens zwei Riechöffnungen fluidisch gekoppelt sind, und/oder dass in ihm gemäß einer dritten Option wenigstens zwei Verleitgeruchsbehälter geöffnet sind und jeder dieser Verleitgeruchsbehälter an genau eine oder wenigstens zwei Riechöffnungen fluidisch gekoppelt ist. Gemäß der ersten Option ist beispielhaft ein Verleitgeruchsbehälter V1 ausschließlich an eine Riechöffnung Ö1 oder zwei Riechöffnungen Ö1 und Ö2 fluidisch gekoppelt. Gemäß der zweiten Option sind beispielhaft zwei Verleitgeruchsbehälter V1 und V2 gemeinsam ausschließlich an eine Riechöffnung Ö1 oder zwei Riechöffnungen Ö1 und Ö2 fluidisch gekoppelt, sodass V1 an Ö1 und auch V2 an Ö1 gekoppelt ist oder V1 an Ö1 und Ö2 und auch V2 an Ö1 und Ö2 gekoppelt ist. Gemäß der dritten Option ist beispielhaft ein Verleitgeruchsbehälter V1 ausschließlich an eine Riechöffnung Ö1 oder zwei Riechöffnungen Ö1 und Ö2 fluidisch gekoppelt, und ist ein Verleitgeruchsbehälter V2 ausschließlich an eine Riechöffnung Ö3 oder zwei Riechöffnungen Ö3 und Ö4 fluidisch gekoppelt, sodass V1 an Ö1 und V2 an Ö3 gekoppelt ist oder V1 an Ö1 und V2 an Ö3 und Ö4 gekoppelt ist oder V1 an Ö1 und Ö2 und V2 an Ö3 gekoppelt ist oder V1 an Ö1 und Ö2 und V2 an Ö3 und Ö4 gekoppelt ist.

Bei einer Ausführungsform der Erfindung ist spezifiziert, dass die Vorrichtung umfasst
- wenigstens eine Verschlussfläche für den wenigstens einen Verleitgeruchsbehälter;
wobei
- der wenigstens eine Verleitgeruchsbehälter eine verschließbare Verleitgeruchsöffnung aufweist, die von einem Dichtrand umgeben ist;
- die Koppeleinrichtung eine Antriebseinrichtung für den wenigstens einen Verleitgeruchsbehälter umfasst;
- die Antriebseinrichtung derart ausgebildet ist, dass sie
   - den wenigstens einen Verleitgeruchsbehälter in eine erste Position bewegen kann, in der der jeweilige Dichtrand an der Verschlussfläche oder an einer der Verschlussflächen vollständig derart anliegt, dass die jeweilige Verleitgeruchsöffnung verschlossen ist;
   - den wenigstens einen Verleitgeruchsbehälter in eine zweite Position bewegen kann, in der die jeweilige Verleitgeruchsöffnung und diejenigen Riechöffnungen, die gemäß dem ausgewählten Koppelzustand dieser Verleitgeruchsöffnung zugeordnet sind, zumindest teilweise überlappen.

Jede dieser Verschlussflächen kann nach Bedarf auf beliebige Weise ausgebildet sein, beispielsweise an der Innenseite der Frontplatte.

Bei einer Ausführungsform der Erfindung ist spezifiziert, dass die Vorrichtung umfasst
- wenigstens einen Deckel mit einer Verschlussfläche für den wenigstens einen Verleitgeruchsbehälter;
wobei
- der wenigstens eine Verleitgeruchsbehälter eine verschließbare Verleitgeruchsöffnung aufweist, die von einem Dichtrand umgeben ist;
- die Koppeleinrichtung eine Antriebseinrichtung für den wenigstens einen Deckel umfasst;
- die Antriebseinrichtung derart ausgebildet ist, dass sie
   - den wenigstens einen Deckel in eine erste Position bewegen kann, in der die jeweilige Verschlussfläche an wenigstens einem der Dichtränder vollständig und/oder dichtend derart anliegt, dass die jeweilige Verleitgeruchsöffnung verschlossen ist;
   - den wenigstens einen Deckel in eine zweite Position bewegen kann, in der die jeweilige Verschlussfläche an keinem der Dichtränder vollständig oder dichtend anliegt.

Bei einer Ausführungsform der Erfindung ist spezifiziert, dass in der zweiten Position eines dieser Deckel wenigstens eine derjenigen Verleitgeruchsöffnungen, die gemäß dem ausgewählten Koppelzustand vorbestimmt sind, und diejenigen Riechöffnungen, die gemäß dem ausgewählten Koppelzustand diesen Verleitgeruchsöffnungen zugeordnet sind, zumindest teilweise überlappen.

Die Vorrichtung kann nach Bedarf auf beliebige Art und Weise ausgebildet sein, beispielsweise derart, dass sie genau einen dieser Deckel oder wenigstens einen zusätzlichen Deckel umfasst. Jeder dieser Deckel kann nach Bedarf auf beliebige Weise ausgebildet sein, beispielsweise derart, dass er genau einem oder wenigstens einem der Verleitgeruchsbehälter zugeordnet ist. Die Vorrichtung umfasst beispielsweise genau einen gemeinsamen Deckel für sämtliche Verleitgeruchsbehälter zusammen, oder sie umfasst beispielsweise zu jedem Verleitgeruchsbehälter einen eigenen Deckel.

Bei einer Ausführungsform der Erfindung ist spezifiziert, dass in dem Schließzustand die Zielgeruchsöffnungen und/oder die Verleitgeruchsöffnungen verschlossen sind oder gasdicht und/oder geruchsdicht verschlossen sind.

Bei einer Ausführungsform der Erfindung ist spezifiziert, dass jeder Zielgeruchsbehälter einen Zielgeruchsstoff und/oder jeder Verleitgeruchsbehälter einen Verleitgeruchsstoff enthält.

Die Vorrichtung kann nach Bedarf auf beliebige Art und Weise ausgebildet sein, beispielsweise derart, dass die Zielgeruchsbehälter unterschiedliche Zielgeruchsstoffe enthalten, es ist aber auch möglich, dass wenigstens zwei Zielgeruchsbehälter den gleichen Zielgeruchsstoff enthalten, und/oder derart, dass die Verleitgeruchsbehälter unterschiedliche Verleitgeruchsstoffe enthalten, es ist aber auch möglich, dass wenigstens zwei Verleitgeruchsbehälter den gleichen Verleitgeruchsstoff enthalten.

Bei einer Ausführungsform der Erfindung ist spezifiziert, dass die Vorrichtung umfasst
- eine Temperiereinrichtung für wenigstens einen der Geruchsbehälter;
wobei
- die Steuereinrichtung an die Temperiereinrichtung gekoppelt ist;
- die Steuereinrichtung derart ausgebildet ist, dass sie
   - die Temperiereinrichtung in Abhängigkeit von den Meldesignalen und/oder gemäß dem Programm ansteuern kann.

Die Temperiereinrichtung ist dazu konfiguriert, um jeden der zugeordneten Geruchsbehälter und/oder jeden der in diesen Geruchsbehältern enthaltenen Geruchsstoffe auf eine vorbestimmte Temperatur zu bringen.

Die Temperiereinrichtung ermöglicht eine Anpassung des Trainings an die Klimabedingungen, die an einem späteren Einsatzort des Tiers vorliegen werden.

Die Temperiereinrichtung kann nach Bedarf auf beliebige Weise ausgebildet sein, beispielsweise derart, dass sie genau eine oder wenigstens eine Heizeinrichtung und/oder genau eine oder wenigstens eine Kühleinrichtung umfasst.

Bei einer Ausführungsform der Erfindung ist spezifiziert, dass das Programm umfasst, dass die Steuereinrichtung die Temperiereinrichtung derart ansteuert, dass die Temperiereinrichtung vor dem ersten Zeitpunkt jeden der jeweiligen Geruchsbehälter und/oder jeden der jeweiligen Geruchsstoffe auf eine vorbestimmte Temperatur bringt.

Bei einer Ausführungsform der Erfindung ist spezifiziert, dass das Programm umfasst, dass die Steuereinrichtung die erste Zeitmessung erst dann startet, wenn die vorbestimmten Temperaturen erreicht sind.

Bei einer Ausführungsform der Erfindung ist spezifiziert, dass die Belohnungseinrichtung wenigstens einen Futterbehälter und/oder wenigstens einen Spielzeugbehälter umfasst.

Bei einer Ausführungsform der Erfindung ist spezifiziert, dass die Vorrichtung wenigstens einen Datenspeicher umfasst, der an die Steuereinrichtung gekoppelt ist und in dem zumindest ein Teil des Programms und/oder zumindest ein Teil der von dem Programm benötigten Daten und/oder zumindest ein Teil der von dem Programm verarbeiteten Daten gespeichert ist.

Die von dem Programm benötigten Daten umfassen beispielsweise die Tabellen. Die von dem Programm verarbeiteten Daten umfassen beispielsweise die Ergebnisse der Zeitmessungen und das Abbrechen der ersten Zeitmessung.

Jeder der Datenspeicher kann nach Bedarf auf beliebige Weise ausgebildet sein, beispielsweise gemäß dem fünften Aspekt und/oder derart, dass er wenigstens einen Halbleiterspeicher und/oder wenigstens einen Flash-Speicher und/oder wenigstens ein Festplattenlaufwerk und/oder wenigstens eine Speicherkarte und/oder wenigstens einen USB-Speicherstick umfasst.

Bei einer Ausführungsform der Erfindung ist spezifiziert, dass die Vorrichtung umfasst
- eine Fernsteuereinrichtung für die Steuereinrichtung;
- eine Kommunikationseinrichtung, die eine kabellose und/oder kabelgebundene Verbindung zwischen der Steuereinrichtung und der Fernsteuereinrichtung herstellen kann.

Die Fernsteuereinrichtung ist dazu konfiguriert, um die Steuereinrichtung aus der Ferne zu steuern oder zu bedienen.

Vorzugsweise wird das vorgeschlagene Verfahren unter Verwendung einer Vorrichtung ausgeführt, die gemäß dem ersten Aspekt ausgebildet ist.

Bei einer Ausführungsform des vorgeschlagenen Verfahrens ist spezifiziert, dass
- in dem Schritt d
   - der Koppelzustand aus mehreren vorbestimmten Koppelzuständen ausgewählt wird,
      und
   - zu einem vorbestimmten ersten Zeitpunkt eine erste Zeitmessung gestartet und der ausgewählte Koppelzustand hergestellt wird;
- in dem Schritt e
   - die erste Zeitmessung gestoppt und gleichzeitig eine zweite Zeitmessung gestartet wird, sobald eines der Meldesignale erzeugt wird, und
   - die zweite Zeitmessung gestoppt wird, sobald dieses Meldesignal nicht mehr erzeugt wird;
- in dem Schritt f, falls die Dauer der zweiten Zeitmessung einen vorbestimmten Schwellenwert überschreitet, zu einem vorbestimmten zweiten Zeitpunkt nach dem Stoppen der zweiten Zeitmessung das Tier auf eine vorbestimmte Weise belohnt und optional das Signal für das Tier erzeugt wird.

Andernfalls, also falls die Dauer der zweiten Zeitmessung den Schwellenwert nicht überschreitet, wird das Tier nicht belohnt.

Bei einer Ausführungsform des vorgeschlagenen Verfahrens ist spezifiziert, dass in dem Schritt f ein vorbestimmtes Signal für das Tier in Abhängigkeit von den Meldesignalen erzeugt wird.

Bei einer Ausführungsform des vorgeschlagenen Verfahrens ist spezifiziert, dass das Erzeugen des Signals für das Tier zu einem vorbestimmten dritten Zeitpunkt nach dem Stoppen der zweiten Zeitmessung erfolgt.

Falls die Dauer der zweiten Zeitmessung den Schwellenwert nicht überschreitet oder falls die erste Zeitspanne nicht abgelaufen ist, wird das Signal für das Tier nicht erzeugt.

Bei einer Ausführungsform des vorgeschlagenen Verfahrens ist spezifiziert, dass die Ergebnisse der Zeitmessungen gespeichert werden. Dies erfolgt bevorzugt mit Hilfe des Datenspeichers der Vorrichtung.

Bei einer Ausführungsform des vorgeschlagenen Verfahrens ist spezifiziert, dass nach dem Stoppen der zweiten Zeitmessung der Schließzustand hergestellt oder erzeugt oder verwirklicht oder erschaffen wird, beispielsweise in dem Schritt e oder f.

Bei einer Ausführungsform des vorgeschlagenen Verfahrens ist spezifiziert, dass in dem Schritt e die erste Zeitmessung abgebrochen wird, sobald eine vorbestimmte zweite Zeitspanne abgelaufen ist, ohne dass eines der Meldesignale erzeugt worden ist.

Dann ist bevorzugt spezifiziert, dass das Abbrechen der ersten Zeitmessung gespeichert wird. Dies erfolgt bevorzugt mit Hilfe des Datenspeichers der Vorrichtung.

Bei einer Ausführungsform des vorgeschlagenen Verfahrens ist spezifiziert, dass
- in einem Schritt g nach dem Schritt f zu dem Schritt c oder d gesprungen wird;
- die Anzahl der Ausführungen des Schrittes g vorbestimmt und/oder durch eine vorbestimmte dritte Zeitspanne begrenzt ist.

Dann ist bevorzugt spezifiziert, dass in dem Schritt g der Koppelzustand und/oder wenigstens einer der Zeitpunkte geändert wird.

Bei einer Ausführungsform des vorgeschlagenen Verfahrens ist spezifiziert, dass
- in dem Schritt a wenigstens ein verschließbarer Verleitgeruchsbehälter zur Aufnahme eines Verleitgeruchsstoffes bereitgestellt wird;
- in dem Schritt b in den wenigstens einen Verleitgeruchsbehälter ein Verleitgeruchsstoff eingefüllt wird;
- in dem Schließzustand der wenigstens eine Verleitgeruchsbehälter verschlossen ist;
- in dem Koppelzustand wenigstens ein vorbestimmter Verleitgeruchsbehälter geöffnet und an wenigstens eine vorbestimmte Riechöffnung fluidisch gekoppelt ist, und/oder in dem Koppelzustand wenigstens ein vorbestimmter Verleitgeruchsbehälter geöffnet und an wenigstens eine vorbestimmte Riechöffnung fluidisch gekoppelt ist und der wenigstens eine Zielgeruchsbehälter verschlossen ist.

Bei einer Ausführungsform des vorgeschlagenen Verfahrens ist spezifiziert, dass vor dem Schritt d oder vor dem ersten Zeitpunkt wenigstens einer der Geruchsbehälter auf eine vorbestimmte Temperatur gebracht wird.

Die gemäß dem vierten Aspekt vorgeschlagenen Daten umfassen beispielhaft die Ergebnisse der Zeitmessungen und das Abbrechen der ersten Zeitmessung.

Jedes der vorgeschlagenen Verfahren kann beispielhaft mit Hilfe einer der vorgeschlagenen Vorrichtungen oder unter Verwendung einer der vorgeschlagenen Verfahren ausgeführt werden. Jede der vorgeschlagenen Vorrichtungen kann beispielhaft derart ausgebildet sein oder dazu dienen oder dafür geeignet sein, dass sie eines der vorgeschlagenen Verfahren ausführt oder ausführen kann.

Die Erläuterungen zu einem der Aspekte der Erfindung, insbesondere zu einzelnen Merkmalen dieses Aspektes, gelten entsprechend auch analog für die anderen Aspekte der Erfindung.

Im Folgenden werden Ausführungsformen der Erfindung beispielhaft anhand der beigefügten Zeichnungen näher erläutert. Die daraus hervorgehenden einzelnen Merkmale sind jedoch nicht auf die einzelnen Ausführungsformen beschränkt, sondern können mit weiter oben beschriebenen einzelnen Merkmalen und/oder mit einzelnen Merkmalen anderer Ausführungsformen verbunden und/oder kombiniert werden. Die Einzelheiten in den Zeichnungen sind nur erläuternd, nicht aber beschränkend auszulegen. Die in den Ansprüchen enthaltenen Bezugszeichen sollen den Schutzbereich der Erfindung in keiner Weise beschränken, sondern verweisen lediglich auf die in den Zeichnungen gezeigten Ausführungsformen.

Die Zeichnungen zeigen in
- FIG. 1: eine perspektivische Ansicht einer bevorzugten Ausführungsform einer Vorrichtung für die Riechausbildung eines Tiers, wobei eine Futterwanne herausgeschwenkt ist;
- FIG. 2: die Vorrichtung aus FIG. 1, wobei die Futterwanne hineingeschwenkt ist und ein Frontteil herausgeschwenkt ist;
- FIG. 3: die Vorrichtung aus FIG. 2, wobei das Frontteil entfernt ist;
- FIG. 4: die Vorderansicht zu FIG. 1;
- FIG. 5: eine Schnittansicht längs der Linie E-E aus FIG. 4;
- FIG. 6: das Detail F aus FIG. 5;
- FIG. 7: eine perspektivische Ansicht einer bevorzugten Ausführungsform einer Funktions-gruppe der Vorrichtung aus FIG. 2;
- FIG. 8: die Vorderansicht zu FIG. 7;
- FIG. 9: die Rückansicht zu FIG. 7;
- FIG. 10: die Draufsicht zu FIG. 7;
- FIG. 11: die Seitenansicht von rechts zu FIG. 7;
- FIG. 12: eine perspektivische Ansicht einer bevorzugten Ausführungsform einer Geruchs-gruppe der Funktionsgruppe aus FIG. 7;
- FIG. 13: die Vorderansicht zu FIG. 12;
- FIG. 14: eine Schnittansicht längs der Linie C-C aus FIG. 13;
- FIG. 15: eine Explosionsdarstellung zu FIG. 12;
- FIG. 16: eine perspektivische Ansicht einer bevorzugten Ausführungsform eines Futterbehäl-ters der Funktionsgruppe aus FIG. 7;
- FIG. 17: die Vorderansicht zu FIG. 16;
- FIG. 18: eine Schnittansicht längs der Linie A-A aus FIG. 17;
- FIG. 19: eine Explosionsdarstellung zu FIG. 18;
- FIG. 20: eine bevorzugte Ausführungsform eines Verfahrens für die Riechausbildung eines Tiers, wobei die Vorrichtung aus FIG. 1 verwendet wird.

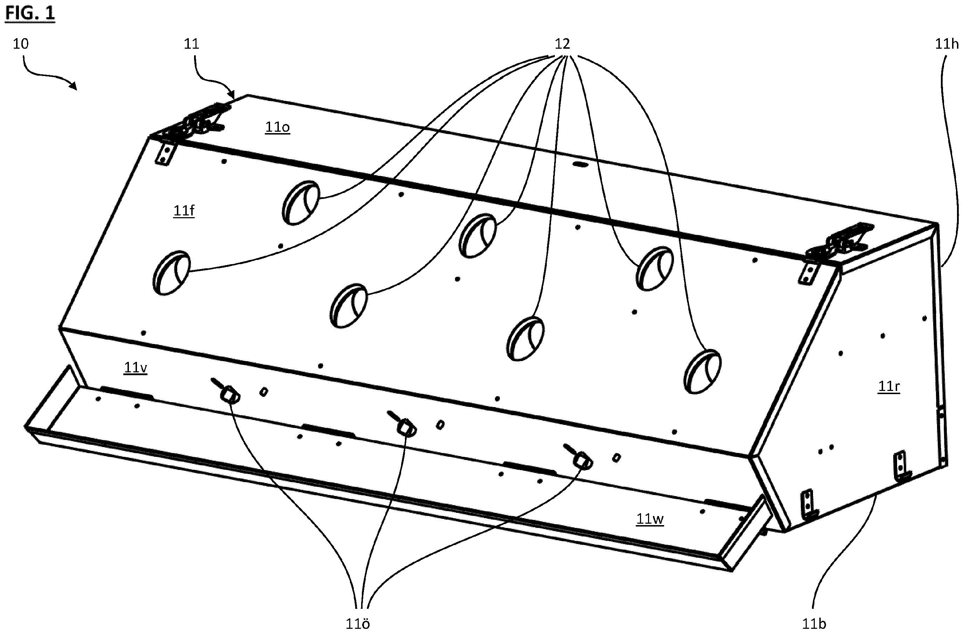

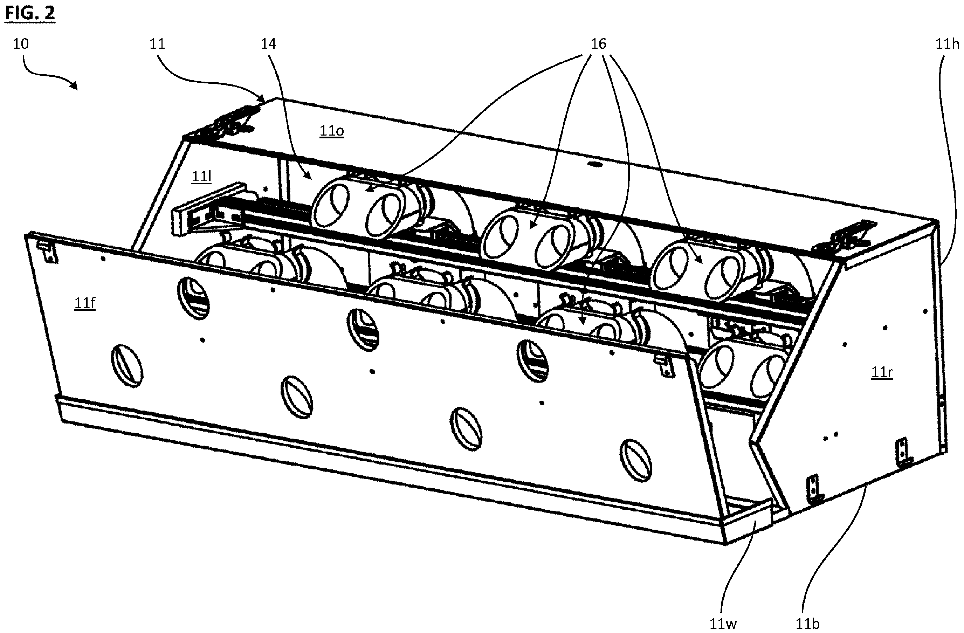

In FIG. 1, FIG. 2, FIG. 3, FIG. 4, FIG. 5 und FIG. 6ist eine bevorzugte Ausführungsform einer erfindungsgemäßen Vorrichtung 10 für die Riechausbildung eines Tiers schematisch dargestellt, die beispielhaft für die Riechausbildung eines Hundes ausgebildet ist. Die Vorrichtung 10 umfasst ein Gehäuse 11, das beispielhaft allseitig geschlossen ist und eine Frontplatte 11f, eine Futterwanne 11w, eine Vorderteil 11v mit drei Futteröffnungen 11ö, eine Bodenplatte 11b, eine Rückplatte 11h, eine Oberplatte 11o sowie eine linke und eine rechte Seitenplatte 11l, 11r umfasst.

Vorderplatte 11v, Bodenplatte 11b, Hinterplatte 11h, Oberplatte 11o, Futterwanne 11w und Seitenplatten 11l, 11r sind bevorzugt aus rostfreiem Stahlblech oder verzinktem Blech hergestellt. Die Frontplatte 11f umfasst beispielhaft eine Außenlage 11f', die bevorzugt aus rostfreiem Stahlblech oder verzinktem Blech hergestellt ist, sowie eine Innenlage 11f", die an der Innenseite der Außenlage 11f' anliegt und beispielhaft aus einem Kunststoff, wie beispielsweise einem Thermoplast, Polyethylen (PE), Polypropylen (PP), Polytetrafluorethylen (PTFE) oder Polyurethan (PUR), hergestellt ist. Es ist aber auch möglich, dass beispielsweise die Innenseite der Außenlage 11f' mit einem derartigen Kunststoff beschichtet ist.

Frontplatte 11f, Vorderplatte 11v, Bodenplatte 11b, Hinterplatte 11h, Oberplatte 11o und Futterwanne 11w weisen jeweils eine rechteckige Grundform auf. Die Seitenplatten 11l, 11r weisen eine fünfeckige Grundform auf, die eine waagerecht nach hinten verlaufende Unterkante, eine von dort senkrecht nach oben verlaufende Hinterkante, eine von dort waagerecht nach vorn verlaufende Oberkante, eine von dort schräg nach vorn-unten verlaufende, obere Vorderkante und eine von dort schräg nach hinten-unten verlaufende, untere Vorderkante hat. Die Unterkante und die Hinterkante schließen beispielhaft einen Innenwinkel von ungefähr 90° ein. Die Hinterkante und die Oberkante schließen beispielhaft einen Innenwinkel von ungefähr 90° ein. Die Oberkante und die obere Vorderkante schließen beispielhaft einen Innenwinkel von ungefähr 135° ein. Die obere und die untere Vorderkante schließen beispielhaft einen Innenwinkel von ungefähr 105° ein. Die untere Vorderkante und die Unterkante schließen beispielhaft einen Innenwinkel von ungefähr 120° ein. Die Futterwanne 11w ist mit ihrer Hinterkante an der Unterkante der Vorderplatte 11v schwenkbar angelenkt und ist an ihrer Vorderkante sowie ihrer linken und rechten Seitenkante um ungefähr 90° nach oben gebogen. Die Frontplatte 11f ist mit ihrer Unterkante an der Oberkante der Vorderplatte 11v einteilig befestigt. Die Vorderplatte 11v ist mit ihrer Unterkante an der Vorderkante der Bodenplatte 11b schwenkbar angelenkt. Die Bodenplatte 11b ist mit ihrer Hinterkante an der Unterkante der Hinterplatte 11h schwenkbar angelenkt. Die Hinterplatte 11h ist mit ihrer Oberkante an der Hinterkante der Oberplatte 11o einteilig befestigt. Die Oberplatte 11o ist an ihrer Vorderkante mit der Oberkante der Frontplatte 11f mit Hilfe von zwei Verschlüssen, die beispielhaft als Spannverschlüsse oder als Kniehebelverschlüsse ausgebildet sind, lösbar verbunden. Die Bodenplatte 11b ist mit ihrer linken Seitenkante an der Unterkante der linken Seitenplatte 11l und mit ihrer rechten Seitenkante an der Unterkante der rechten Seitenplatte 11r einteilig befestigt. Im geschlossenen Zustand des Gehäuses 11, wie er in FIG. 1 dargestellt ist, liegt die linke Seitenplatte 11l mit ihrer oberen Vorderkante an der linken Seitenkante der Frontplatte 11f an, mit ihrer unteren Vorderkante an der linken Seitenkante der Vorderplatte 11v, mit ihrer Hinterkante an der linken Seitenkante der Hinterplatte 11h, und mit ihrer Oberkante an der linken Seitenkante der Oberplatte 11o. Im geschlossenen Zustand des Gehäuses 11 liegt entsprechend die rechte Seitenplatte 11r mit ihrer oberen Vorderkante an der rechten Seitenkante der Frontplatte 11f an, mit ihrer unteren Vorderkante an der rechten Seitenkante der Vorderplatte 11v, mit ihrer Hinterkante an der rechten Seitenkante der Hinterplatte 11h, und mit ihrer Oberkante an der rechten Seitenkante der Oberplatte 11o.

In der Frontplatte 11f sind beispielhaft sieben Riechöffnungen 12 ausgebildet. Die Riechöffnungen 12 sind in einer oberen und einer unteren Zeile jeweils äquidistant derart angeordnet, dass in der oberen Zeile drei der Riechöffnungen 12 und in der unteren Zeile die restlichen vier Riechöffnungen 12 angeordnet sind und die drei oberen Riechöffnungen 12 jeweils mittig über der Lücke zwischen jeweils zwei benachbarten unteren Riechöffnungen 12 angeordnet sind. Die drei Futteröffnungen 11ö sind jeweils fluchtend unter den drei oberen Riechöffnungen 12 angeordnet.

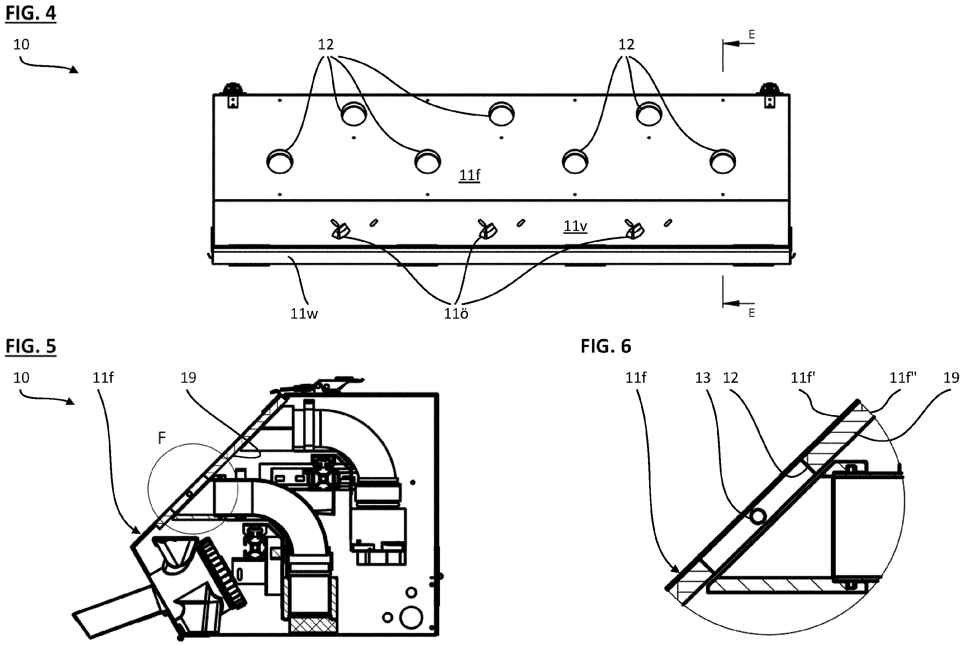

Die Vorrichtung 10 umfasst beispielhaft sieben Sensoren 13 (FIG. 6), die den Riechöffnungen 12 eineindeutig zugeordnet sind, und somit zu jeder Riechöffnung 12 einen Sensor 13. Die Sensoren 13 sind in das Material der Innenlage 11f" eingelassen und beispielhaft jeweils als IR-Lichtschranke ausgebildet.

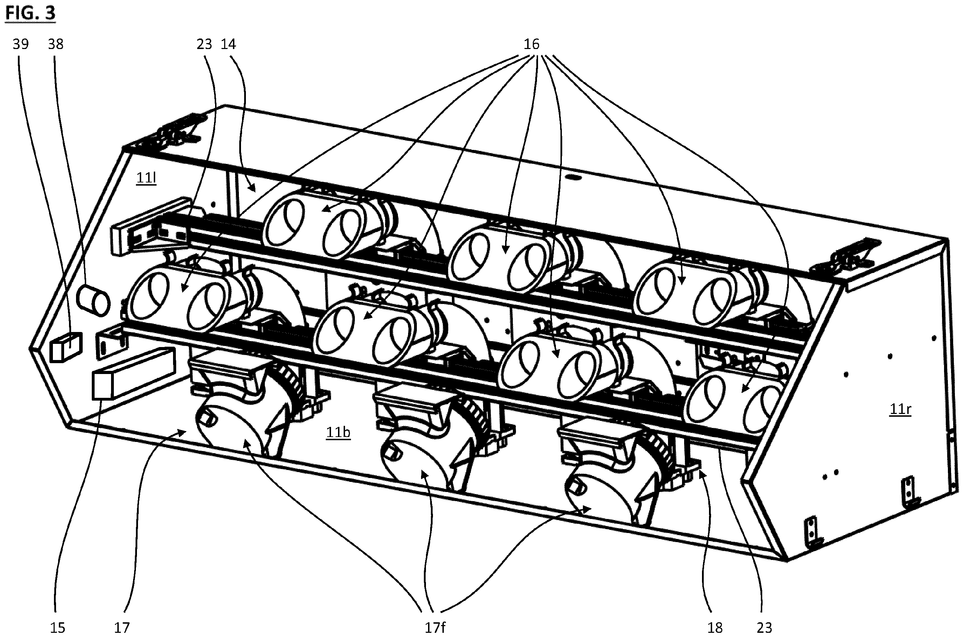

Die Vorrichtung 10 umfasst außerdem eine Funktionsgruppe 14, die in dem Gehäuse 11 angeordnet ist, und eine Steuereinrichtung 15 (FIG. 3), die an die Sensoren 13 und die Funktionsgruppe 14 gekoppelt ist und beispielhaft an der Innenseite der linken Seitenplatte 11l befestigt ist. Jeder Sensor 13 ist derart ausgebildet ist, dass er überwachen kann, ob das Tier seine Nase in die jeweilige Riechöffnung 12 steckt, und dass er, solange dies der Fall ist, ein entsprechendes Meldesignal an die Steuereinrichtung 15 sendet.

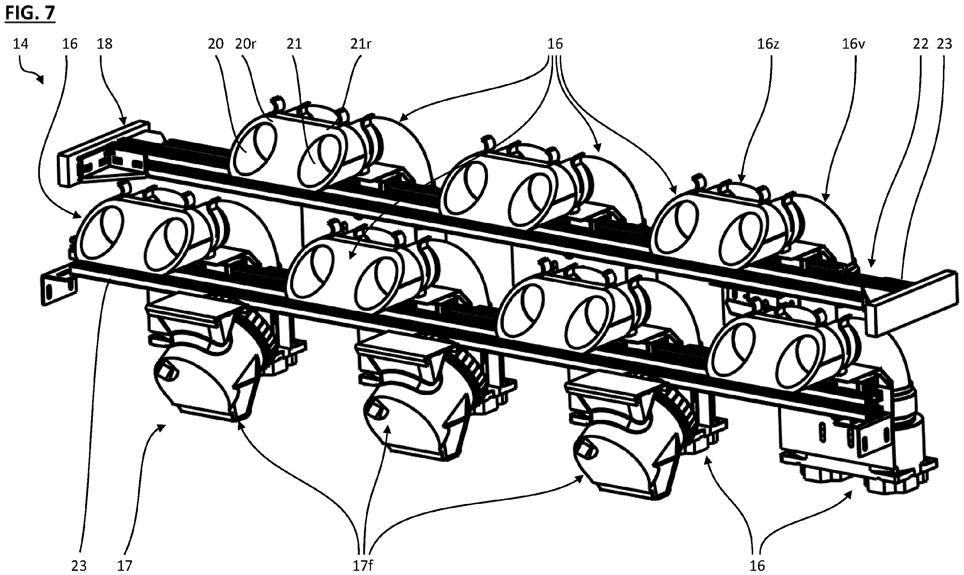

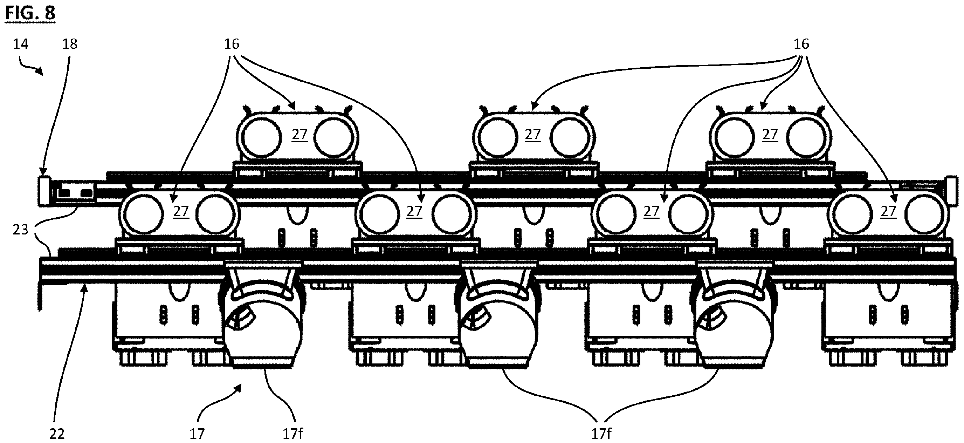

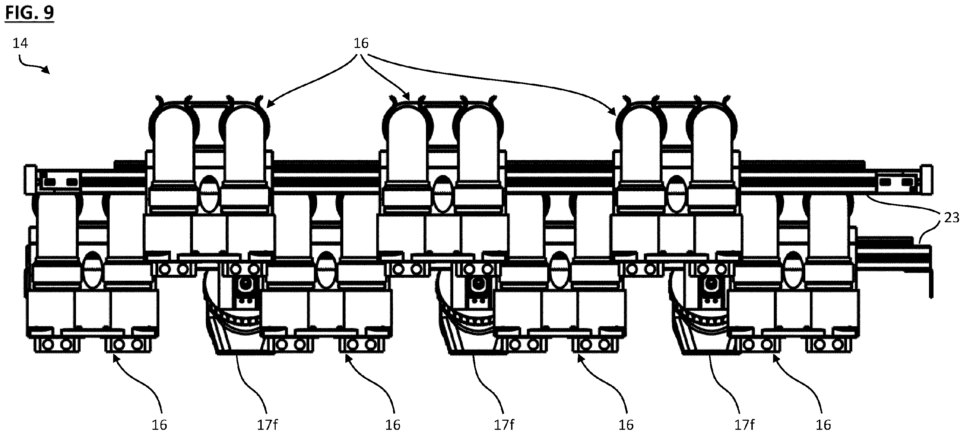

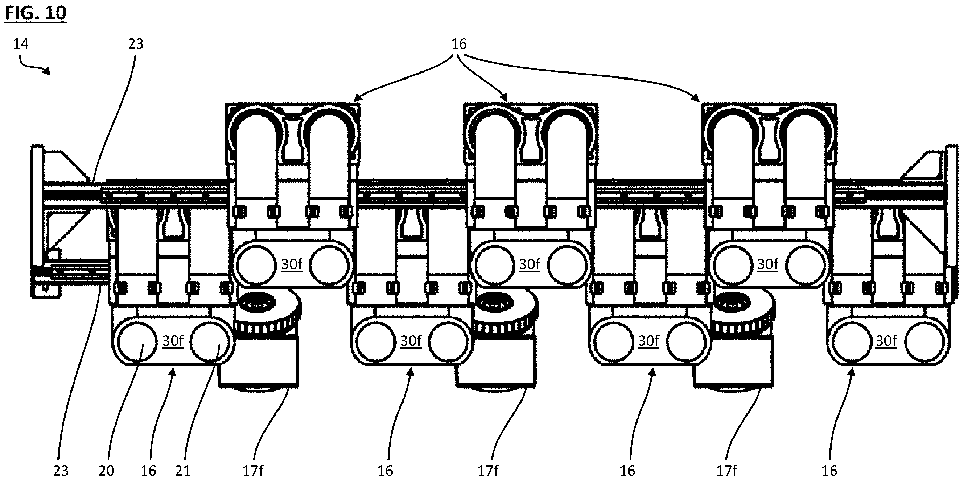

In FIG. 7, FIG. 8, FIG. 9, FIG. 10 und FIG. 11 ist eine bevorzugte Ausführungsform der Funktionsgruppe 14 schematisch dargestellt. Die Funktionsgruppe 14 umfasst beispielhaft sieben Geruchsgruppen 16, die jeweils einen Zielgeruchsbehälter 16z zur Aufnahme eines Zielgeruchsstoffes und einen Verleitgeruchsbehälter 16v zur Aufnahme eines Verleitgeruchsstoffes umfassen. Zielgeruchsbehälter 16z und Verleitgeruchsbehälter 16v werden gemeinsam auch als Geruchsbehälter 16vz bezeichnet. Die Geruchsgruppen 16 sind den Riechöffnungen 12 eineindeutig zugeordnet. Die Funktionsgruppe 14 umfasst eine Belohnungseinrichtung 17 zum Ausgeben einer Belohnung für das Tier, die beispielhaft drei Futterbehälter 17f umfasst. Die Futterbehälter 17f sind an der Oberseite der Bodenplatte 11b und angrenzend an die Vorderkante der Bodenplatte 11b befestigt und den drei Futteröffnungen 11ö eineindeutig zugeordnet, sodass die Belohnungseinrichtung 17 zu jeder Futteröffnung 11ö einen Futterbehälter 17f umfasst. Die Funktionsgruppe 14 umfasst eine Koppeleinrichtung 18 für die Geruchsgruppen 16, die somit eine Koppeleinrichtung 18 für die Zielgeruchsbehälter 16z und die Verleitgeruchsbehälter 16v bildet. Die Koppeleinrichtung 18 und die Belohnungseinrichtung 17 sind an die Steuereinrichtung 15 gekoppelt. Die Steuereinrichtung 15 ist derart ausgebildet, dass sie die Koppeleinrichtung 18 und die Belohnungseinrichtung 17 in Abhängigkeit von den Meldesignalen und gemäß einem vorbestimmten Programm ansteuern kann.

Die Vorrichtung 10 umfasst beispielhaft genau eine Verschlussfläche 19 (FIG. 5, 6) für die Geruchsbehälter 16vz, die somit sowohl eine Verschlussfläche 19 für die die Zielgeruchsbehälter 16z als auch eine Verschlussfläche 19 für die Verleitgeruchsbehälter 16v bildet. Die Verschlussfläche 19 ist an der Innenseite der Innenlage 11f" und somit an der Innenseite der Frontplatte 11f ausgebildet.

Jeder Zielgeruchsbehälter 16z weist eine verschließbare Zielgeruchsöffnung 20 auf, die von einem Dichtrand 20r umgeben ist, und jeder Verleitgeruchsbehälter 16v weist eine verschließbare Verleitgeruchsöffnung 21 auf, die von einem Dichtrand 21r umgeben ist.

Die Koppeleinrichtung 18 umfasst eine Antriebseinrichtung 22 für die Geruchsbehälter 16vz, die somit sowohl eine Antriebseinrichtung 22 für die die Zielgeruchsbehälter 16z als auch eine Antriebseinrichtung 22 für die Verleitgeruchsbehälter 16v bildet.

Die Antriebseinrichtung 22 umfasst beispielhaft eine obere und eine untere Tragschiene 23, die mit ihren linken Enden an der linken Seitenplatte 11l und mit ihren rechten Enden an der rechten Seitenplatte 11r befestigt sind. Die obere Tragschiene 23 liegt waagerecht und parallel zu der unteren Tragschiene 23 und ist derart nach hinten versetzt, dass beide Tragschienen 23 in demselben Abstand parallel zu der Verschlussfläche 19 verlaufen. An der oberen Tragschiene 23 sind drei der Geruchsgruppen 16 verschiebbar gelagert, und an der unteren Tragschiene 23 sind die restlichen vier Geruchsgruppen 16 verschiebbar gelagert. Die Geruchsgruppen 16 sind ähnlich wie die Riechöffnungen 12 versetzt zueinander angeordnet.

Die Antriebseinrichtung 22 umfasst beispielhaft sieben Elektromotoren 24 (FIG. 4), die den Geruchsgruppen 16 eineindeutig zugeordnet sind, und somit zu jeder Geruchsgruppe 16 einen Elektromotor 24. Jeder dieser Elektromotoren 24 ist an die Steuereinrichtung 15 gekoppelt und kann von dieser individuell angesteuert werden. Jeder dieser Elektromotoren 24 ist an der Unterseite der jeweiligen Tragschiene 23 befestigt und treibt ein Ritzel (nicht dargestellt) an. Jedes dieser Ritzel kämmt mit einer zugeordneten Zahnstange (nicht dargestellt), die an der jeweiligen Geruchsgruppe 16 befestigt ist. Somit kann jeder Elektromotor 24 die jeweilige Geruchsgruppe 16 längs der jeweiligen Tragschiene 23 parallel zu der Verschlussfläche 19 in eine erste, eine zweite und eine dritte Position verschieben.

In jeder dieser ersten Positionen liegen die jeweiligen Dichtränder 20r, 21r vollständig an der Verschlussfläche 19 derart an, dass die jeweilige Zielgeruchsöffnung 20 und die jeweilige Verleitgeruchsöffnung 21 durch die Verschlussfläche 19 abgedeckt und somit verschlossen sind.

In jeder dieser zweiten Positionen überlappen die jeweilige Zielgeruchsöffnung 20 und die jeweils zugeordnete Riechöffnung 12 und liegt der jeweilige Dichtrand 21r an der Verschlussfläche 19 derart an, dass die jeweilige Verleitgeruchsöffnung 21 durch die Verschlussfläche 19 abgedeckt und somit verschlossen sind.

In jeder dieser dritten Positionen überlappen die jeweilige Verleitgeruchsöffnung 21 und die jeweils zugeordnete Riechöffnung 12 und liegt der jeweilige Dichtrand 20r vollständig an der Verschlussfläche 19 derart an, dass die jeweilige Zielgeruchsöffnung 20 durch die Verschlussfläche 19 abgedeckt und somit verschlossen sind.

Somit ist die Antriebseinrichtung 22 derart ausgebildet, dass sie
- jeden Zielgeruchsbehälter 16z in eine erste Position bewegen kann, in der der jeweilige Dichtrand 20r vollständig an der Verschlussfläche 19 derart anliegt, dass die jeweilige Zielgeruchsöffnung 20 durch die Verschlussfläche 19 abgedeckt und somit verschlossen ist;
- jeden Zielgeruchsbehälter 16z in eine zweite Position bewegen kann, in der die jeweilige Zielgeruchsöffnung 20 und die jeweils zugeordnete Riechöffnung 12 überlappen;
- jeden Verleitgeruchsbehälter 16v in eine erste Position bewegen kann, in der der jeweilige Dichtrand 21r vollständig an der Verschlussfläche 19 derart anliegt, dass die jeweilige Verleitgeruchsöffnung 21 durch die Verschlussfläche 19 abgedeckt und somit verschlossen sind;
- jeden Verleitgeruchsbehälter 16v in eine zweite Position bewegen kann, in der die jeweilige Verleitgeruchsöffnung 21 und die jeweils zugeordnete Riechöffnung 12 überlappen.

Jeder Zielgeruchsbehälter 16z nimmt seine erste Position ein, wenn die jeweilige Geruchsgruppe 16 ihre erste oder ihre dritte Position einnimmt, und er nimmt seine zweite Position ein, wenn die jeweilige Geruchsgruppe 16 ihre zweite Position einnimmt.

Jeder Verleitgeruchsbehälter 16v nimmt seine erste Position ein, wenn die jeweilige Geruchsgruppe 16 ihre erste oder ihre zweite Position einnimmt, und er nimmt seine zweite Position ein, wenn die jeweilige Geruchsgruppe 16 ihre dritte Position einnimmt.

Somit ist die Koppeleinrichtung 18 derart ausgebildet, dass sie einen Schließzustand einnehmen kann, in dem sämtliche Geruchsbehälter 16vz verschlossen sind, und dass sie beispielhaft vierzehn Koppelzustände einnehmen kann, in denen jeweils genau einer der vierzehn Geruchsbehälter 16vz geöffnet und an eine der Riechöffnungen 12 fluidisch gekoppelt ist. Es ist auch möglich, dass die Koppeleinrichtung 18 anstelle einzelner dieser vierzehn Koppelzustände oder zusätzlich zu diesen vierzehn Koppelzuständen andere Koppelzustände einnehmen kann, in denen wenigstens zwei der vierzehn Geruchsbehälter 16vz geöffnet und an entsprechende Riechöffnungen 12 fluidisch gekoppelt sind.

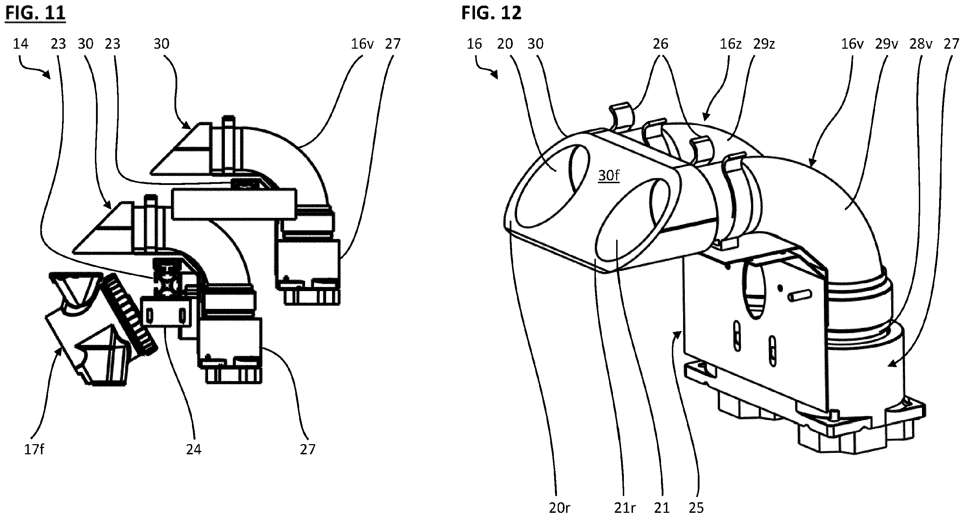

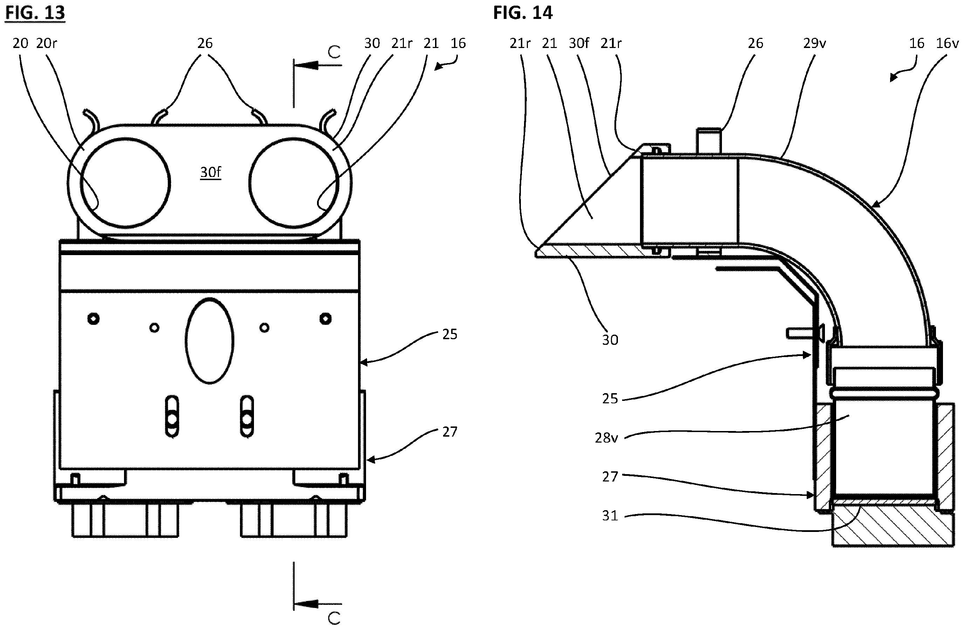

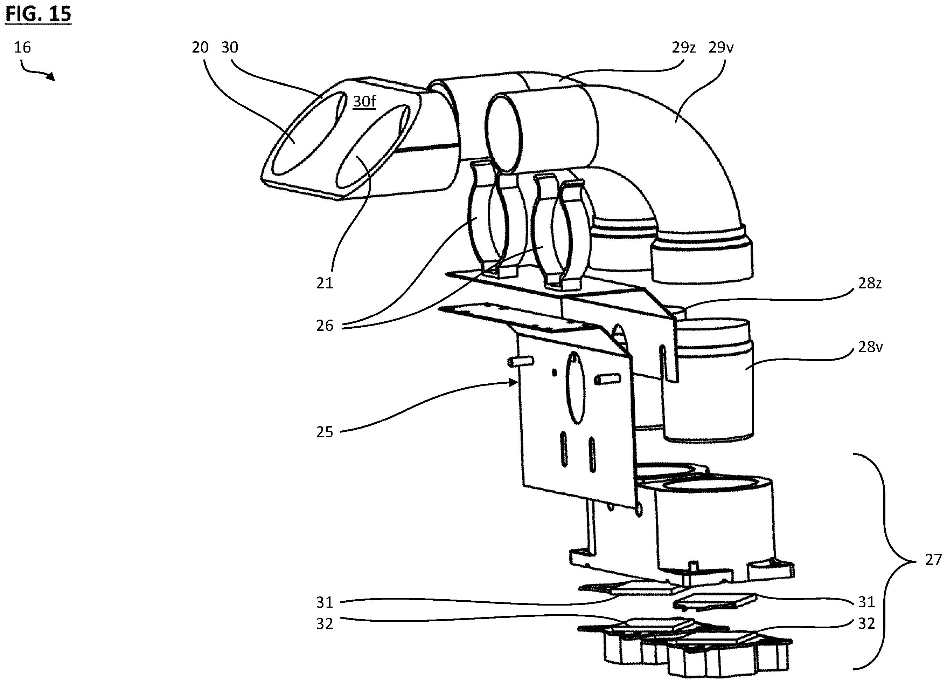

In FIG. 12, FIG. 13, FIG. 14 und FIG. 15 ist eine bevorzugte Ausführungsform der Geruchsgruppe 16 schematisch dargestellt. Die Geruchsgruppe 16 umfasst ein abgewinkeltes Trägerteil 25, zwei Haltespangen 26 und eine Geruchsbehälteraufnahme 27. Das Trägerteil 25 weist ein waagerechtes Oberteil und ein senkrechtes Unterteil auf. Auf der Oberseite des Oberteils sind die beiden Haltespangen 26 nach oben ragend befestigt. An der Rückseite des Unterteils ist die Geruchsbehälteraufnahme 27 befestigt. Der Zielgeruchsbehälter 16z umfasst ein Zielgeruchsgefäß 28z, in das der Zielgeruchsstoff gefüllt wird, und ein um 90° gebogenes Zielgeruchsrohr 29z, das mit seinem unteren Rand dicht auf dem oberen Rand des Zielgeruchsgefäßes 28z sitzt. Der Verleitgeruchsbehälter 16v ist hierzu analog ausgebildet und umfasst ein Verleitgeruchsgefäß 28v, in das der Verleitgeruchsstoff gefüllt wird, und ein um 90° gebogenes Verleitgeruchsrohr 29v, das mit seinem unteren Rand dicht auf dem oberen Rand des Verleitgeruchsgefäßes 28v sitzt. Die Geruchsbehälteraufnahme 27 weist zwei senkrechte, unten verschlossene Bohrungen auf, in denen die Geruchsgefäße 28vz aufrecht stehen. Die Geruchsbehälter 16vz teilen sich eine gemeinsame Gleitbrille 30, die eine schräge, parallel zu der Verschlussfläche 19 verlaufende Gleitfläche 30f aufweist, in der zwei parallele, waagerechte Durchgangsbohrungen nebeneinander münden. Die linke Durchgangsbohrung bildet die Zielgeruchsöffnung 20, die rechte Durchgangsbohrung bildet die Verleitgeruchsöffnung 21, und die Gleitfläche 30f bildet die Dichtränder 20r, 21r. Das Zielgeruchsrohr 29z sitzt mit seinem vorderen Rand dicht in die hintere Öffnung der linken Durchgangsbohrung, und das Verleitgeruchsrohr 29v sitzt mit seinem vorderen Rand dicht in die hintere Öffnung der rechten Durchgangsbohrung. Somit ist das Zielgeruchsgefäß 28z, und somit auch ein in seinem Innenraum enthaltener Zielgeruchsstoff, über das Zielgeruchsrohr 29z und die Gleitbrille 30 fluidisch mit der Zielgeruchsöffnung 20 verbunden, und ist das Verleitgeruchsgefäß 28v, und somit auch ein in seinem Innenraum enthaltener Verleitgeruchsstoff, über das Verleitgeruchsrohr 29v und die Gleitbrille 30 mit der Verleitgeruchsöffnung 21 fluidisch verbunden.

Die Geruchsbehälteraufnahme 27 weist zwei senkrechte, unten verschlossene Bohrungen auf, in denen die Geruchsgefäße 28vz aufrecht stehen.

Die Vorrichtung 10 umfasst eine Temperiereinrichtung für die Geruchsbehälter 16vz. Die Temperiereinrichtung umfasst für jeden der Zielgeruchsbehälter 16z ein Peltier-Element 31 und einen Temperatursensor 32, die zwischen dem Boden des jeweiligen Zielgeruchsgefäßes 28z und dem Boden der jeweiligen Bohrung der Geruchsbehälteraufnahme 27 sitzen, sowie für jeden der Verleitgeruchsbehälter 16v ein Peltier-Element 31 und einen Temperatursensor 32, die zwischen dem Boden des jeweiligen Verleitgeruchsgefäßes 28v und dem Boden der jeweiligen Bohrung der Geruchsbehälteraufnahme 27 sitzen. Die Temperatursensoren 32 senden die gemessenen Temperaturwerte an die Steuereinrichtung 15. Jedes Peltier-Element 31 ist an die Steuereinrichtung 15 gekoppelt und kann von dieser in Abhängigkeit von den gemessenen Temperaturwerten individuell angesteuert werden, um den jeweiligen Geruchsbehälter 16vz und den darin enthaltenen Geruchsstoff wahlweise zu erhitzen oder abzukühlen und so auf eine vorbestimmte Temperatur zu bringen. Die Steuereinrichtung 15 ist derart ausgebildet, dass sie die Peltier-Elemente 31 und somit die Temperiereinrichtung in Abhängigkeit von den Meldesignalen und gemäß dem Programm ansteuern kann.

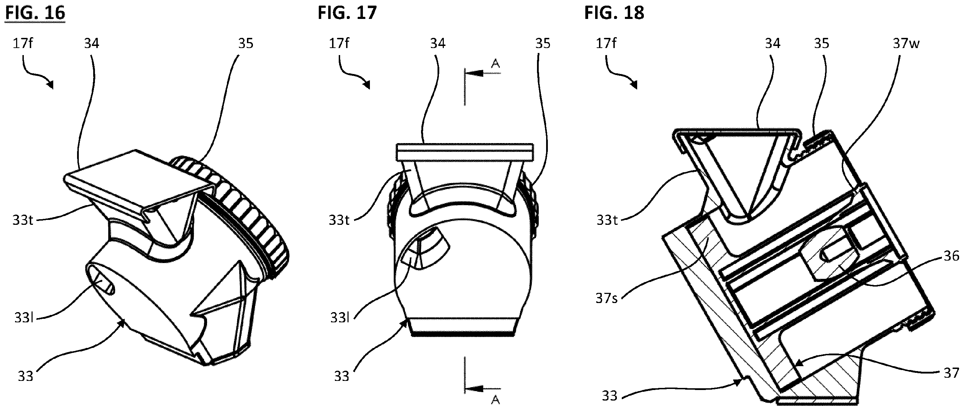

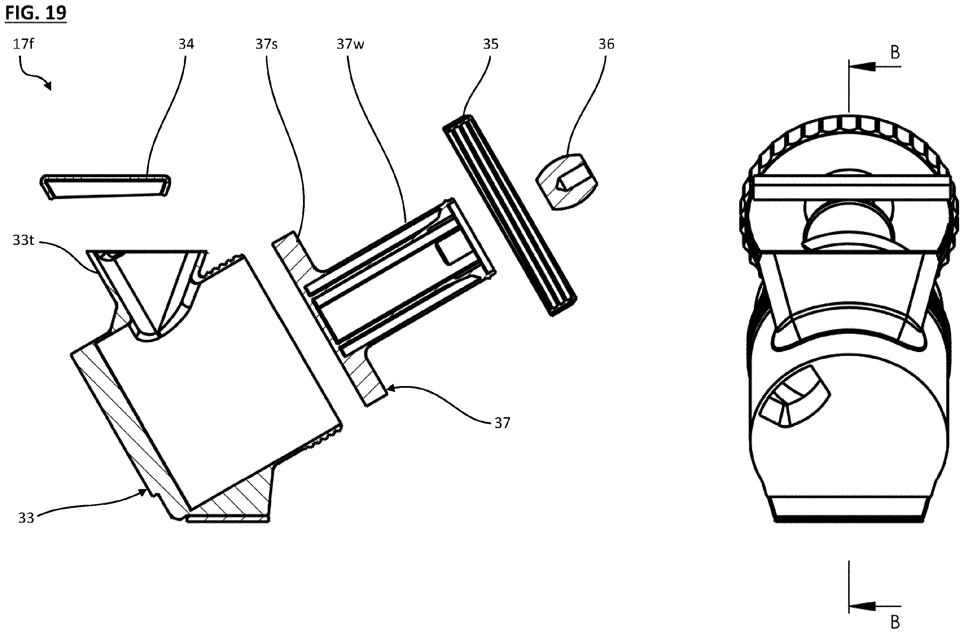

In FIG. 16, FIG. 17, FIG. 18 und FIG. 19 ist eine bevorzugte Ausführungsform der drei Futterbehälter 17f schematisch dargestellt. Jeder Futterbehälter 17f umfasst ein Futtergefäß 33 mit einem Einfülltrichter 33t und einem zylindrischen Innenraum. Der Einfülltrichter 33t mündet von oben senkrecht in den Innenraum, sodass Leckerli in Gestalt von Futterpellets oder Futterbröckchen durch den Einfülltrichter 33t in den Innenraum gefüllt werden können. Der Innenraum verläuft schräg um ungefähr 30° gegen die Horizontale gekippt nach hintenoben und weist an seinem hinteren Ende eine Öffnung mit Außengewinde und an seinem gegenüberliegenden vorderen Ende einen Boden auf. Der Boden weist in einem oberen Randbereich ein Ausgabeloch 33l auf. Das Ausgabeloch 33l fluchtet mit der jeweiligen Futteröffnung 11ö. Das Futtergefäß 33 ist beispielhaft einteilig aus einem Kunststoff, wie beispielsweise einem Thermoplast, Polyethylen (PE), Polypropylen (PP), Polytetrafluorethylen (PTFE) oder Polyurethan (PUR), hergestellt.

Der Futterbehälter 17f umfasst einen Trichterdeckel 34, einen Schraubdeckel 35 mit einer zentralen Durchgangsbohrung, eine Antriebsnuss 36 und einen Futtermitnehmer 37, der eine Hohlwelle 37w und eine Dosierscheibe 37s mit einer Aussparung (nicht dargestellt) umfasst. Der Trichterdeckel 34 sitzt verschiebbar auf dem Einfülltrichter 33t. Der Schraubdeckel 35 ist auf das Außengewinde geschraubt.

Die Antriebsnuss 36 ist in die Hohlwelle 37w geschoben und mit einer biegsamen Abtriebswelle (nicht dargestellt) eines Elektromotors (nicht dargestellt) drehfest verbunden. Die Belohnungseinrichtung 17 umfasst zu jedem der Futterbehälter 17f einen derartigen Elektromotor, der an der Unterseite der unteren Tragschiene 23 befestigt ist. Die Antriebsnuss 36 greift mit ihrer Außenfläche an der Innenfläche der Hohlwelle 37w derart an, dass durch Drehen der Antriebsnuss 36 die Hohlwelle 37w gedreht wird.

Der Futtermitnehmer 37 dient zum Vereinzeln und Transportieren von Leckerli, die sich in dem Innenraum befinden, und ist beispielhaft einteilig aus einem Kunststoff, wie beispielsweise einem Thermoplast, Polyethylen (PE), Polypropylen (PP), Polytetrafluorethylen (PTFE) oder Polyurethan (PUR), hergestellt. Die Hohlwelle 37w ist mit ihrem oberen Ende in der Durchgangsbohrung des Schraubdeckels 35 drehbar gelagert und trägt an ihrem unteren Ende die Dosierscheibe 37s. Die Dosierscheibe 37s liegt mit ihrer Unterseite an dem Boden des Innenraums an und hat einen Außendurchmesser, der geringfügig kleiner als der Innendurchmesser des Innenraums ist. Die Aussparung ist derart ausgebildet, dass sie ein einzelnes Leckerli aufnehmen kann. Wenn der Futtermitnehmer 37 gedreht wird, fällt ein einzelnes Leckerli in die Aussparung und wird von der Dosierscheibe 37s aufwärts bis zu dem Ausgabeloch 33l geschoben, durch das es in die jeweilige Futteröffnung 11ö rutscht und schließlich aus dieser Futteröffnung 11ö in die Futterwanne 11w fällt.

Die Vorrichtung umfasst beispielhaft eine Signaleinrichtung zum Erzeugen eines Signals für das Tier. Die Signaleinrichtung umfasst beispielhaft einen Lautsprecher 38, der an die Steuereinrichtung 15 gekoppelt ist und beispielhaft an der Innenseite der linken Seitenplatte 11l befestigt ist. Die Steuereinrichtung 15 ist derart ausgebildet ist, dass sie den Lautsprecher 39 und somit die Signaleinrichtung in Abhängigkeit von den Meldesignalen und gemäß dem Programm ansteuern kann. Die Steuereinrichtung 15 steuert den Lautsprecher 40 derart an, dass dieser ein akustisches Signal erzeugt, das beispielhaft ein Klick ist, wie er mit einem beim Klickertraining verwendeten Klicker erzeugt wird. Vorzugsweise wird dieser Klicker dann später beim Feldeinsatz des Tiers verwendet.

Die Vorrichtung 10 umfasst beispielhaft einen Datenspeicher 39, der an die Steuereinrichtung 15 gekoppelt ist und in dem die von dem Programm benötigten Daten gespeichert sind und in dem die Steuereinrichtung 15 die von dem Programm verarbeiteten Daten abspeichert. Der Datenspeicher 39 ist beispielhaft ein Festplattenlaufwerk.

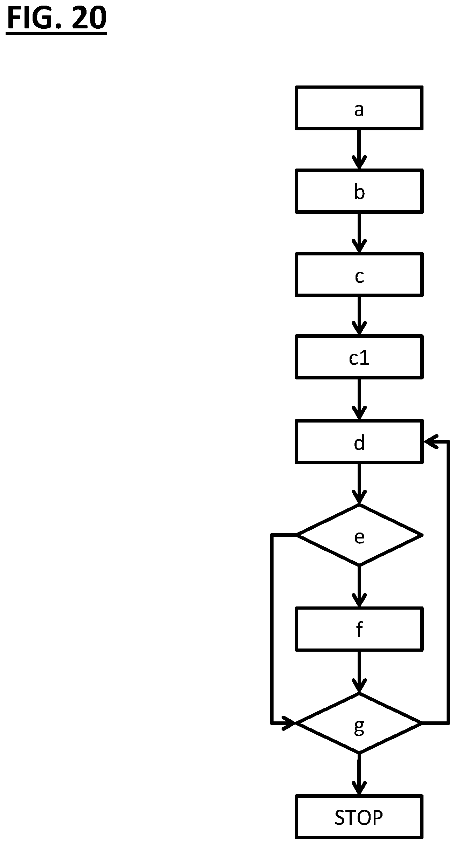

In FIG. 20 ist eine bevorzugte Ausführungsform eines Verfahrens für die Riechausbildung eines Tiers als Ablaufdiagramm schematisch dargestellt. Bei dieser Ausführungsform wird das Verfahren beispielhaft mit Hilfe und unter Verwendung der Vorrichtung 10 ausgeführt. Die Vorrichtung 10 ist derart ausgebildet, dass sie diese Ausführungsform ausführen kann.

In einem Schritt a wird die Vorrichtung 10 bereitgestellt. Somit werden das Gehäuse 11 mit der Frontplatte 11f, in der die sieben Riechöffnungen 12 ausgebildet ist, die sieben verschließbaren Zielgeruchsbehälter 16z zur Aufnahme eines Zielgeruchsstoffes und die sieben verschließbaren Verleitgeruchsbehälter 16v zur Aufnahme eines Verleitgeruchsstoffes bereitgestellt. Außerdem werden die Futterwanne 11w, die Steuereinrichtung 15, die Belohnungseinrichtung 17 mit den drei Futterbehältern 17f, die Koppeleinrichtung 18 mit der Antriebseinrichtung 22, die Verschlussfläche 19, die Signaleinrichtung mit dem Lautsprecher 38, den Datenspeicher 39 sowie die Temperiereinrichtung mit den vierzehn Peltier-Elementen 31 und den vierzehn Temperatursensoren 32 bereitgestellt.

In einem Schritt b, der auf den Schritt a folgt, wird in jeden Zielgeruchsbehälter 16z, nämlich in das jeweilige Zielgeruchsgefäß 28z, ein Zielgeruchsstoff und in jeden Verleitgeruchsbehälter 16v, nämlich in das jeweilige Verleitgeruchsgefäß 28v, ein Verleitgeruchsstoff eingefüllt. Bei dieser Ausführungsform gleichen sich die Zielgeruchsstoffe und gleichen sich die Verleitgeruchsstoffe.

Außerdem werden in diesem Schritt Leckerli in Gestalt von Futterpellets oder Futterbröckchen in die drei Futterbehälter 17f gefüllt.

In einem Schritt c, der auf den Schritt b folgt, wird der Schließzustand hergestellt, in dem die Zielgeruchsbehälter 16z und die Verleitgeruchsbehälter 16v verschlossen sind. Dies erfolgt mit Hilfe der Steuereinrichtung 15, der Antriebseinrichtung 22 und der Verschlussfläche 19.

Außerdem wird in diesem Schritt jeder der Geruchsbehälter 16vz und der jeweils darin enthaltene Geruchsstoff auf eine vorbestimmte Temperatur gebracht. Dies erfolgt mit Hilfe der Steuereinrichtung 15 und der Temperiereinrichtung.

In einem Schritt c1, der auf den Schritt c folgt, werden sieben unterschiedliche Koppelzuständen vorbestimmt und wird eine Zählvariable auf Null gesetzt. Dies erfolgt mit Hilfe der Steuereinrichtung 15 und des Datenspeichers 39. Der erste dieser sieben Koppelzustände ist dadurch definiert, dass
- der erste Zielgeruchsbehälter 16z, also der Zielgeruchsbehälter 16z der ersten Geruchsgruppe 16, geöffnet und mit Hilfe des jeweiligen Zielgeruchsrohrs 29z und der jeweiligen Gleitbrille 30 an die jeweils zugeordnete Riechöffnung 12, also die erste Riechöffnung 12, die in FIG. 1 in der unteren Zeile ganz links dargestellt ist, fluidisch gekoppelt ist,
- die sechs übrigen Zielgeruchsbehälter 16z mit Hilfe der Koppeleinrichtung 18 verschlossen sind,
- der erste Verleitgeruchsbehälter 16v, also der Verleitgeruchsbehälter 16v der ersten Geruchsgruppe 16, mit Hilfe der Koppeleinrichtung 18 verschlossen ist,
- der zweite Verleitgeruchsbehälter 16v, also der Verleitgeruchsbehälter 16v der zweiten Geruchsgruppe 16, geöffnet und mit Hilfe des jeweiligen Verleitgeruchsrohrs 29v und der jeweiligen Gleitbrille 30 an die jeweils zugeordnete Riechöffnung 12, also die zweite Riechöffnung 12, die in FIG. 1 in der oberen Zeile ganz links dargestellt ist, fluidisch gekoppelt ist,
- der dritte Verleitgeruchsbehälter 16v, also der Verleitgeruchsbehälter 16v der dritten Geruchsgruppe 16, geöffnet und mit Hilfe des jeweiligen Verleitgeruchsrohrs 29v und derjeweiligen Gleitbrille 30 an die jeweils zugeordnete Riechöffnung 12, also die dritte Riechöffnung 12, die in FIG. 1 in der unteren Zeile als zweite von links dargestellt ist, fluidisch gekoppelt ist,
- der vierte Verleitgeruchsbehälter 16v, also der Verleitgeruchsbehälter 16v der vierten Geruchsgruppe 16, geöffnet und mit Hilfe des jeweiligen Verleitgeruchsrohrs 29v und derjeweiligen Gleitbrille 30 an die jeweils zugeordnete Riechöffnung 12, also die vierte Riechöffnung 12, die in FIG. 1 in der oberen Zeile in der Mitte dargestellt ist, fluidisch gekoppelt ist,
- der fünfte Verleitgeruchsbehälter 16v, also der Verleitgeruchsbehälter 16v der fünften Geruchsgruppe 16, geöffnet und mit Hilfe des jeweiligen Verleitgeruchsrohrs 29v und der jeweiligen Gleitbrille 30 an die jeweils zugeordnete Riechöffnung 12, also die fünfte Riechöffnung 12, die in FIG. 1 in der unteren Zeile als zweite von rechts dargestellt ist, fluidisch gekoppelt ist,
- der sechste Verleitgeruchsbehälter 16v, also der Verleitgeruchsbehälter 16v der sechsten Geruchsgruppe 16, geöffnet und mit Hilfe des jeweiligen Verleitgeruchsrohrs 29v und der jeweiligen Gleitbrille 30 an die jeweils zugeordnete Riechöffnung 12, also die sechste Riechöffnung 12, die in FIG. 1 in der oberen Zeile ganz rechts dargestellt ist, fluidisch gekoppelt ist, und
- der siebente Verleitgeruchsbehälter 16v, also der Verleitgeruchsbehälter 16v der siebenten Geruchsgruppe 16, geöffnet und mit Hilfe des jeweiligen Verleitgeruchsrohrs 29v und der jeweiligen Gleitbrille 30 an die jeweils zugeordnete Riechöffnung 12, also die siebente Riechöffnung 12, die in FIG. 1 in der unteren Zeile ganz rechts dargestellt ist, fluidisch gekoppelt ist.

Der zweite Koppelzustand ist dadurch definiert, dass
- der zweite Zielgeruchsbehälter 16z, also der Zielgeruchsbehälter 16z der zweiten Geruchsgruppe 16, geöffnet und mit Hilfe des jeweiligen Zielgeruchsrohrs 29z und der jeweiligen Gleitbrille 30 an die zweite Riechöffnung 12 fluidisch gekoppelt ist,
- die sechs übrigen Zielgeruchsbehälter 16z mit Hilfe der Koppeleinrichtung 18 verschlossen sind,
- der zweite Verleitgeruchsbehälter 16v mit Hilfe der Koppeleinrichtung 18 verschlossen ist,
   und
- jeder der sechs übrigen Verleitgeruchsbehälter 16v geöffnet und mit Hilfe des jeweiligen Verleitgeruchsrohrs 29v und der jeweiligen Gleitbrille 30 an die jeweilige Riechöffnung 12 fluidisch gekoppelt ist.

Der dritte Koppelzustand ist dadurch definiert, dass
- der dritte Zielgeruchsbehälter 16z, also der Zielgeruchsbehälter 16z der dritten Geruchsgruppe 16, geöffnet und mit Hilfe des jeweiligen Zielgeruchsrohrs 29z und der jeweiligen Gleitbrille 30 an die dritte Riechöffnung 12 fluidisch gekoppelt ist,
- die sechs übrigen Zielgeruchsbehälter 16z mit Hilfe der Koppeleinrichtung 18 verschlossen sind,
- der dritte Verleitgeruchsbehälter 16v mit Hilfe der Koppeleinrichtung 18 verschlossen ist,
   und
- jeder der sechs übrigen Verleitgeruchsbehälter 16v geöffnet und mit Hilfe des jeweiligen Verleitgeruchsrohrs 29v und der jeweiligen Gleitbrille 30 an die jeweilige Riechöffnung 12 fluidisch gekoppelt ist.

Der vierte Koppelzustand ist dadurch definiert, dass
- der vierte Zielgeruchsbehälter 16z, also der Zielgeruchsbehälter 16z der vierten Geruchsgruppe 16, geöffnet und mit Hilfe des jeweiligen Zielgeruchsrohrs 29z und der jeweiligen Gleitbrille 30 an die vierte Riechöffnung 12 fluidisch gekoppelt ist,
- die sechs übrigen Zielgeruchsbehälter 16z mit Hilfe der Koppeleinrichtung 18 verschlossen sind,
- der vierte Verleitgeruchsbehälter 16v mit Hilfe der Koppeleinrichtung 18 verschlossen ist,
   und
- jeder der sechs übrigen Verleitgeruchsbehälter 16v geöffnet und mit Hilfe des jeweiligen Verleitgeruchsrohrs 29v und der jeweiligen Gleitbrille 30 an die jeweilige Riechöffnung 12 fluidisch gekoppelt ist.

Der fünfte Koppelzustand ist dadurch definiert, dass
- der fünfte Zielgeruchsbehälter 16z, also der Zielgeruchsbehälter 16z der fünften Geruchsgruppe 16, geöffnet und mit Hilfe des jeweiligen Zielgeruchsrohrs 29z und der jeweiligen Gleitbrille 30 an die fünfte Riechöffnung 12 fluidisch gekoppelt ist,
- die sechs übrigen Zielgeruchsbehälter 16z mit Hilfe der Koppeleinrichtung 18 verschlossen sind,
- der fünfte Verleitgeruchsbehälter 16v mit Hilfe der Koppeleinrichtung 18 verschlossen ist,
   und
- jeder der sechs übrigen Verleitgeruchsbehälter 16v geöffnet und mit Hilfe des jeweiligen Verleitgeruchsrohrs 29v und der jeweiligen Gleitbrille 30 an die jeweilige Riechöffnung 12 fluidisch gekoppelt ist.

Der sechste Koppelzustand ist dadurch definiert, dass
- der sechste Zielgeruchsbehälter 16z, also der Zielgeruchsbehälter 16z der sechsten Geruchsgruppe 16, geöffnet und mit Hilfe des jeweiligen Zielgeruchsrohrs 29z und der jeweiligen Gleitbrille 30 an die sechste Riechöffnung 12 fluidisch gekoppelt ist,
- die sechs übrigen Zielgeruchsbehälter 16z mit Hilfe der Koppeleinrichtung 18 verschlossen sind,
- der sechste Verleitgeruchsbehälter 16v mit Hilfe der Koppeleinrichtung 18 verschlossen ist, und
- jeder der sechs übrigen Verleitgeruchsbehälter 16v geöffnet und mit Hilfe des jeweiligen Verleitgeruchsrohrs 29v und der jeweiligen Gleitbrille 30 an die jeweilige Riechöffnung 12 fluidisch gekoppelt ist.

Der siebente Koppelzustand ist dadurch definiert, dass
- der siebente Zielgeruchsbehälter 16z, also der Zielgeruchsbehälter 16z der siebenten Geruchsgruppe 16, geöffnet und mit Hilfe des jeweiligen Zielgeruchsrohrs 29z und der jeweiligen Gleitbrille 30 an die siebente Riechöffnung 12 fluidisch gekoppelt ist,
- die sechs übrigen Zielgeruchsbehälter 16z mit Hilfe der Koppeleinrichtung 18 verschlossen sind,
- der siebente Verleitgeruchsbehälter 16v mit Hilfe der Koppeleinrichtung 18 verschlossen ist, und
- jeder der sechs übrigen Verleitgeruchsbehälter 16v geöffnet und mit Hilfe des jeweiligen Verleitgeruchsrohrs 29v und der jeweiligen Gleitbrille 30 an die jeweilige Riechöffnung 12 fluidisch gekoppelt ist.

In einem Schritt d, der auf den Schritt c1 folgt, wird aus diesen sieben Koppelzuständen ein Koppelzustand ausgewählt und wird zu einem vorbestimmten ersten Zeitpunkt eine erste Zeitmessung gestartet. Dies erfolgt mit Hilfe der Steuereinrichtung 15 und des Datenspeichers 39. Die Steuereinrichtung 15 umfasst beispielhaft einen Zufallszahlengenerator, mit dessen Hilfe sie das Auswählen ausführt.

Außerdem wird in diesem Schritt der ausgewählte Koppelzustand hergestellt. Dies erfolgt mit Hilfe der Steuereinrichtung 15, der Antriebseinrichtung 22 und der Verschlussfläche 19.

In einem Schritt e, der auf den Schritt d folgt, wird für diejenige Riechöffnung 12, die gemäß dem ausgewählten Koppelzustand an den entsprechenden Zielgeruchsbehälter 16z gekoppelt ist, überwacht, ob das Tier seine Nase in diese Riechöffnung 12 steckt, und wird, solange dies der Fall ist, ein entsprechendes Meldesignal erzeugt. Dies erfolgt mit Hilfe der Steuereinrichtung 15 und der Sensoren 13.

Außerdem wird in diesem Schritt die erste Zeitmessung gestoppt und gleichzeitig eine zweite Zeitmessung gestartet wird, sobald das Meldesignal erzeugt wird, und wird die zweite Zeitmessung gestoppt, sobald dieses Meldesignal nicht mehr erzeugt wird oder sobald eine vorbestimmte erste Zeitspanne abgelaufen ist, während der dieses Meldesignal durchgehend erzeugt worden ist. Dies erfolgt mit Hilfe der Steuereinrichtung 15 und der Sensoren 13.

Außerdem wird in diesem Schritt die erste Zeitmessung abgebrochen, sobald eine vorbestimmte zweite Zeitspanne abgelaufen ist, ohne dass das Meldesignal erzeugt worden ist.

Dies erfolgt mit Hilfe der Steuereinrichtung 15 und der Sensoren 13.

Außerdem werden in diesem Schritt die Ergebnisse der Zeitmessungen und das Abbrechen der ersten Zeitmessung gespeichert. Dies erfolgt mit Hilfe der Steuereinrichtung 15 und des Datenspeichers 39.

Außerdem wird in diesem Schritt nach dem Stoppen der zweiten Zeitmessung der Schließzustand hergestellt und wird nach dem Abbrechen der ersten Zeitmessung der Schließzustand hergestellt. Dies erfolgt mit Hilfe der Steuereinrichtung 15, der Antriebseinrichtung 22 und der Verschlussfläche 19.

Falls die erste Zeitmessung abgebrochen worden ist, wird zu einem Schritt g gesprungen.

In einem Schritt f, der auf den Schritt e folgt, wird, falls die Dauer der zweiten Zeitmessung einen vorbestimmten Schwellenwert überschreitet oder falls die erste Zeitspanne abgelaufen ist, zu einem vorbestimmten zweiten Zeitpunkt nach dem Stoppen der zweiten Zeitmessung das Tier auf eine vorbestimmte Weise belohnt, indem ein Leckerli durch eine vorbestimmte Futteröffnung 11ö in die Futterwanne 11w ausgegeben wird; andernfalls, also falls die Dauer der zweiten Zeitmessung den Schwellenwert nicht überschreitet oder falls die erste Zeitspanne nicht abgelaufen ist, wird das Tier nicht belohnt. Dies erfolgt mit Hilfe der Steuereinrichtung 15 und der Belohnungseinrichtung 17. Die erste Futteröffnung 11ö, die in FIG. 1 in ganz links dargestellt ist, ist der ersten und zweiten Riechöffnung 12 zugeordnet, die zweite Futteröffnung 11ö, die in FIG. 1 in der Mitte dargestellt ist, ist der dritten, vierten und fünften Riechöffnung 12 zugeordnet, und die dritte Futteröffnung 11ö, die in FIG. 1 in ganz rechts dargestellt ist, ist der sechsten und siebten Riechöffnung 12 zugeordnet. Wenn in dem Schritt d der erste oder zweite Koppelzustand ausgewählt worden ist, dann erfolgt das Belohnen, indem aus der ersten Futteröffnung 11ö ein Leckerli mit Hilfe des zugeordneten ersten Futterbehälters 17f ausgegeben wird. Wenn in dem Schritt d der dritte, vierte oder fünfte Koppelzustand ausgewählt worden ist, dann erfolgt das Belohnen, indem aus der zweiten Futteröffnung 11ö ein Leckerli mit Hilfe des zugeordneten zweiten Futterbehälters 17f ausgegeben wird. Wenn in dem Schritt d der sechste oder siebte Koppelzustand ausgewählt worden ist, dann erfolgt das Belohnen, indem aus der dritten Futteröffnung 11ö ein Leckerli mit Hilfe des zugeordneten dritten Futterbehälters 17f ausgegeben wird. Somit wird das Tier in Abhängigkeit von den Meldesignalen auf eine vorbestimmte Weise belohnt.

Außerdem wird in diesem Schritt zu einem vorbestimmten dritten Zeitpunkt nach dem Stoppen der zweiten Zeitmessung ein Klick erzeugt, falls die Dauer der zweiten Zeitmessung einen vorbestimmten Schwellenwert überschreitet oder falls die erste Zeitspanne abgelaufen ist; andernfalls, also falls die Dauer der zweiten Zeitmessung den Schwellenwert nicht überschreitet oder falls die erste Zeitspanne nicht abgelaufen ist, wird dieses Signal nicht erzeugt. Dies erfolgt mit Hilfe der Steuereinrichtung 15 und der Signaleinrichtung. Somit wird ein vorbestimmtes Signal für das Tier in Abhängigkeit von den Meldesignalen erzeugt. Der dritte Zeitpunkt ist beispielhaft gleich dem zweiten Zeitpunkt.

In dem Schritt g, der auf den Schritt f folgt, wird die Zählvariabel inkrementiert und mit einem vorbestimmten Schwellenwert, der beispielhaft 9 beträgt, verglichen. Dies erfolgt mit Hilfe der Steuereinrichtung 15.

Falls die Zählvariabel kleiner als der Schwellenwert ist, wird zu dem Schritt d gesprungen, sonst wird das Verfahren beendet.

### Bezugszeichenliste

- 10: Vorrichtung für die Riechausbildung eines Tiers
- 11: Gehäuse
- 11b/11f: Bodenplatte/Frontplatte von 11
- 11f'/11f": Außenlage/Innenlage von 11f
- 11h/11l: Hinterplatte/linke Seitenplatte von 11
- 11o/11ö/11r: Oberplatte/Futteröffnung/rechte Seitenplatte von 11
- 11v/11w: Vorderplatte/Futterwanne von 11
- 12: Riechöffnung
- 13: Sensor
- 14: Funktionsgruppe
- 15: Steuereinrichtung
- 16: Geruchsgruppe
- 16v/16z: Verleitgeruchsbehälter/Zielgeruchsbehälter von 16
- 17: Belohnungseinrichtung
- 17f: Futterbehälter von 17
- 18: Koppeleinrichtung
- 19: Verschlussfläche
- 20: Zielgeruchsöffnung
- 20r: Dichtrand von 20
- 21: Verleitgeruchsöffnung
- 21r: Dichtrand von 21
- 22: Antriebseinrichtung
- 23: Tragschiene
- 24: Elektromotor
- 25: Trägerteil
- 26: Haltespange
- 27: Geruchsbehälteraufnahme
- 28v/28z: Verleitgeruchsgefäß/Zielgeruchsgefäß
- 29v/29z: Verleitgeruchsrohr/Zielgeruchsrohr
- 30: Gleitbrille
- 30f: Gleitfläche von 30
- 31: Peltier-Element
- 32: Temperatursensor
- 33: Futtergefäß
- 33l/33t: Ausgabeloch/Einfülltrichter von 33
- 34: Trichterdeckel
- 35: Schraubdeckel
- 36: Antriebsnuss
- 37: Futtermitnehmer
- 37s/37w: Dosierscheibe/Hohlwelle von 37
- 38: Lautsprecher
- 39: Datenspeicher

## Patentansprüche

1. Vorrichtung (10) für die Riechausbildung eines Tiers, umfassend
- ein Gehäuse (11) mit einer Frontplatte (11f), in der wenigstens zwei Riechöffnungen (12) ausgebildet sind;
- zu jeder Riechöffnung (12) wenigstens einen Sensor (13);
- wenigstens einen verschließbaren Zielgeruchsbehälter (16z) zur Aufnahme eines Zielgeruchsstoffes;
- eine Koppeleinrichtung (18) für den wenigstens einen Zielgeruchsbehälter (16z);
- eine Belohnungseinrichtung (17) zum Ausgeben einer Belohnung für das Tier;
- eine Steuereinrichtung (15), die an die Sensoren (13), die Koppeleinrichtung (18) und die Belohnungseinrichtung (17) gekoppelt ist;
wobei
- jeder Sensor (13) derart ausgebildet ist, dass er
- überwachen kann, ob das Tier seine Nase in die jeweilige Riechöffnung (12) steckt, und
- solange dies der Fall ist, ein entsprechendes Meldesignal an die Steuereinrichtung (15) sendet;
- die Koppeleinrichtung (18) derart ausgebildet ist, dass sie
- einen Schließzustand einnehmen kann, in dem der wenigstens eine Zielgeruchsbehälter (16z) verschlossen ist, und
- wenigstens einen Koppelzustand einnehmen kann, in dem wenigstens ein vorbestimmter Zielgeruchsbehälter (16z) geöffnet und an wenigstens eine vorbestimmte Riechöffnung (12) fluidisch gekoppelt ist;
- die Steuereinrichtung (15) derart ausgebildet ist, dass sie
- die Koppeleinrichtung (18) und die Belohnungseinrichtung (17) in Abhängigkeit von den Meldesignalen und/oder gemäß einem vorbestimmten Programm ansteuern kann.

2. Vorrichtung (10) gemäß dem vorherigen Anspruch, wobei
- die Koppeleinrichtung (18) derart ausgebildet ist, dass sie wenigstens zwei Koppelzustände einnehmen kann;
- das Programm umfasst, dass die Steuereinrichtung (15)
- einen der Koppelzustände auswählt;
- zu einem vorbestimmten ersten Zeitpunkt eine erste Zeitmessung startet und die Koppeleinrichtung (18) derart ansteuert, dass die Koppeleinrichtung (18) den ausgewählten Koppelzustand einnimmt;
- die erste Zeitmessung stoppt und gleichzeitig eine zweite Zeitmessung startet, sobald die Steuereinrichtung (15) von einem der Sensoren (13), die dem wenigstens einen gekoppelten Zielgeruchsbehälter (16z) zugeordnet sind, das Meldesignal empfängt;
- die zweite Zeitmessung stoppt, sobald die Steuereinrichtung (15) von diesem Sensor (13) das Meldesignal nicht mehr empfängt;
- falls die Dauer der zweiten Zeitmessung einen vorbestimmten Schwellenwert überschreitet, zu einem vorbestimmten zweiten Zeitpunkt nach dem Stoppen der zweiten Zeitmessung die Belohnungseinrichtung (17) derart ansteuert, dass die Belohnungseinrichtung (17) eine vorbestimmte Belohnung ausgibt.

3. Vorrichtung (10) gemäß einem oder mehreren der vorherigen Ansprüche, umfassend
- eine Signaleinrichtung (38) zum Erzeugen eines Signals für das Tier;
wobei
- die Steuereinrichtung (15) an die Signaleinrichtung (38) gekoppelt ist;
- die Steuereinrichtung (15) derart ausgebildet ist, dass sie
- die Signaleinrichtung (38) in Abhängigkeit von den Meldesignalen und/oder gemäß dem Programm ansteuern kann.

4. Vorrichtung (10) gemäß einem oder mehreren der vorherigen Ansprüche, umfassend
- wenigstens eine Verschlussfläche (19) für den wenigstens einen Zielgeruchsbehälter (16z);
wobei
- der wenigstens eine Zielgeruchsbehälter (16z) eine verschließbare Zielgeruchsöffnung (20) aufweist, die von einem Dichtrand (20r) umgeben ist;
- die Koppeleinrichtung (18) eine Antriebseinrichtung (22) für den wenigstens einen Zielgeruchsbehälter (16z) umfasst;
- die Antriebseinrichtung (22) derart ausgebildet ist, dass sie
- den wenigstens einen Zielgeruchsbehälter (16z) in eine erste Position bewegen kann, in der der jeweilige Dichtrand (20r) an der Verschlussfläche (19) oder an einer der Verschlussflächen (19) vollständig derart anliegt, dass die jeweilige Zielgeruchsöffnung (20) verschlossen ist;
- den wenigstens einen Zielgeruchsbehälter (16z) in eine zweite Position bewegen kann, in der die jeweilige Zielgeruchsöffnung (20) und diejenigen Riechöffnungen (12), die gemäß dem ausgewählten Koppelzustand dieser Zielgeruchsöffnung (20) zugeordnet sind, zumindest teilweise überlappen.

5. Vorrichtung (10) gemäß einem oder mehreren der vorherigen Ansprüche, umfassend
- wenigstens einen verschließbaren Verleitgeruchsbehälter (16v) zur Aufnahme eines Verleitgeruchsstoffes;
wobei
- die Koppeleinrichtung (18) eine Koppeleinrichtung (18) für den wenigstens einen Verleitgeruchsbehälter (16v) ist;
- in dem Schließzustand der wenigstens eine Verleitgeruchsbehälter (16v) verschlossen ist;
- in dem Koppelzustand oder in wenigstens einem der Koppelzustände wenigstens ein vorbestimmter Verleitgeruchsbehälter (16v) geöffnet und an wenigstens eine vorbestimmte Riechöffnung (12) fluidisch gekoppelt ist, und/oder in dem Koppelzustand oder in wenigstens einem der Koppelzustände wenigstens ein vorbestimmter Verleitgeruchsbehälter (16v) geöffnet und an wenigstens eine vorbestimmte Riechöffnung (12) fluidisch gekoppelt ist und der wenigstens eine Zielgeruchsbehälter (16z) verschlossen ist.

6. Vorrichtung (10) gemäß dem vorherigen Anspruch, umfassend
- wenigstens eine Verschlussfläche (19) für den wenigstens einen Verleitgeruchsbehälter (16v);
wobei
- der wenigstens eine Verleitgeruchsbehälter (16v) eine verschließbare Verleitgeruchsöffnung (21) aufweist, die von einem Dichtrand (21r) umgeben ist;
- die Koppeleinrichtung (18) eine Antriebseinrichtung (22) für den wenigstens einen Verleitgeruchsbehälter (16v) umfasst;
- die Antriebseinrichtung (22) derart ausgebildet ist, dass sie
- den wenigstens einen Verleitgeruchsbehälter (16v) in eine erste Position bewegen kann, in der der jeweilige Dichtrand (21r) an der Verschlussfläche (19) oder an einer der Verschlussflächen (19) vollständig derart anliegt, dass die jeweilige Verleitgeruchsöffnung (21) verschlossen ist;
- den wenigstens einen Verleitgeruchsbehälter (16v) in eine zweite Position bewegen kann, in der die jeweilige Verleitgeruchsöffnung (21) und diejenigen Riechöffnungen (12), die gemäß dem ausgewählten Koppelzustand dieser Verleitgeruchsöffnung (21) zugeordnet sind, zumindest teilweise überlappen.

7. Vorrichtung (10) gemäß einem oder mehreren der vorherigen Ansprüche, umfassend
- eine Temperiereinrichtung (31, 32) für wenigstens einen der Geruchsbehälter (16v, 16z);
wobei
- die Steuereinrichtung (15) an die Temperiereinrichtung (31, 32) gekoppelt ist;
- die Steuereinrichtung (15) derart ausgebildet ist, dass sie
- die Temperiereinrichtung (31, 32) in Abhängigkeit von den Meldesignalen und/oder gemäß dem Programm ansteuern kann.

8. Vorrichtung (10) gemäß einem oder mehreren der vorherigen Ansprüche, umfassend
- einen Datenspeicher (39), der an die Steuereinrichtung (15) gekoppelt ist und in dem zumindest ein Teil des Programms und/oder zumindest ein Teil der von dem Programm benötigten Daten und/oder zumindest ein Teil der von dem Programm verarbeiteten Daten gespeichert ist.

9. Verfahren für die Riechausbildung eines Tiers, insbesondere unter Verwendung einer Vorrichtung (10), die gemäß einem oder mehreren der Ansprüche 1 bis 8 ausgebildet ist, wobei
- in einem Schritt a
- ein Gehäuse (11) mit einer Frontplatte (11f), in der wenigstens zwei Riechöffnungen (12) ausgebildet sind, bereitgestellt wird, und
- wenigstens ein verschließbarer Zielgeruchsbehälter (16z) zur Aufnahme eines Zielgeruchsstoffes bereitgestellt wird;
- in einem Schritt b in den wenigstens einen Zielgeruchsbehälter (16z) ein Zielgeruchsstoff eingefüllt wird;
- in einem Schritt c ein Schließzustand hergestellt wird, in dem der wenigstens eine Zielgeruchsbehälter (16z) verschlossen ist;
- in einem Schritt d nach dem Schritt c ein Koppelzustand hergestellt wird, in dem wenigstens ein vorbestimmter Zielgeruchsbehälter (16z) geöffnet und an wenigstens eine vorbestimmte Riechöffnung (12) fluidisch gekoppelt ist;
- in einem Schritt e nach dem Schritt d für die wenigstens eine gekoppelte Riechöffnung (12)
- überwacht wird, ob das Tier seine Nase in die jeweilige Riechöffnung (12) steckt,
und
- solange dies der Fall ist, ein entsprechendes Meldesignal erzeugt wird;
- in einem Schritt f nach dem Schritt e in Abhängigkeit von den Meldesignalen das Tier belohnt und optional ein vorbestimmtes Signal für das Tier erzeugt wird.

10. Verfahren gemäß dem vorherigen Anspruch, wobei
- in dem Schritt d
- der Koppelzustand aus mehreren vorbestimmten Koppelzuständen ausgewählt wird, und
- zu einem vorbestimmten ersten Zeitpunkt eine erste Zeitmessung gestartet und der ausgewählte Koppelzustand hergestellt wird;
- in dem Schritt e
- die erste Zeitmessung gestoppt und gleichzeitig eine zweite Zeitmessung gestartet wird, sobald eines der Meldesignale erzeugt wird, und
- die zweite Zeitmessung gestoppt wird, sobald dieses Meldesignal nicht mehr erzeugt wird;
- in dem Schritt f, falls die Dauer der zweiten Zeitmessung einen vorbestimmten Schwellenwert überschreitet, zu einem vorbestimmten zweiten Zeitpunkt nach dem Stoppen der zweiten Zeitmessung das Tier auf eine vorbestimmte Weise belohnt und optional das Signal für das Tier erzeugt wird.

11. Verfahren gemäß einem oder mehreren der Ansprüche 9 bis 10, wobei
- in dem Schritt e die erste Zeitmessung abgebrochen wird, sobald eine vorbestimmte Zeitspanne abgelaufen ist, ohne dass eines der Meldesignale erzeugt worden ist.

12. Verfahren gemäß einem oder mehreren der Ansprüche 9 bis 11, wobei
- die Ergebnisse der Zeitmessungen gespeichert werden, und/oder
- das Abbrechen der ersten Zeitmessung gespeichert wird.

13. Verfahren gemäß einem oder mehreren der Ansprüche 9 bis 12, wobei
- in einem Schritt g nach dem Schritt f zu dem Schritt c oder d gesprungen wird;
- die Anzahl der Ausführungen des Schrittes g vorbestimmt und/oder durch eine vorbestimmte Zeitspanne begrenzt ist;
- in dem Schritt g der Koppelzustand und/oder wenigstens einer der Zeitpunkte geändert wird.

14. Verfahren gemäß einem oder mehreren der Ansprüche 9 bis 13, wobei
- in dem Schritt a wenigstens ein verschließbarer Verleitgeruchsbehälter (16v) zur Aufnahme eines Verleitgeruchsstoffes bereitgestellt wird;
- in dem Schritt b in den wenigstens einen Verleitgeruchsbehälter (16v) ein Verleitgeruchsstoff eingefüllt wird;
- in dem Schließzustand der wenigstens eine Verleitgeruchsbehälter (16v) verschlossen ist;
- in dem Koppelzustand wenigstens ein vorbestimmter Verleitgeruchsbehälter (16v) geöffnet und an wenigstens eine vorbestimmte Riechöffnung (12) fluidisch gekoppelt ist, und/oder in dem Koppelzustand wenigstens ein vorbestimmter Verleitgeruchsbehälter (16v) geöffnet und an wenigstens eine vorbestimmte Riechöffnung (12) fluidisch gekoppelt ist und der wenigstens eine Zielgeruchsbehälter (16z) verschlossen ist.

15. Verfahren gemäß einem oder mehreren der Ansprüche 9 bis 14, wobei
- vor dem Schritt d oder vor dem ersten Zeitpunkt wenigstens einer der Geruchsbehälter (16v, 16z) auf eine vorbestimmte Temperatur gebracht wird.

## Claims

1. Device (10) for scent training an animal, comprising
- a housing (11) having a front panel (11f) in which at least two scent openings (12) are formed;
- at least one sensor (13) for each scent opening (12);
- at least one closeable target scent container (16z) for receiving a target scent substance;
- a coupling device (18) for the at least one target scent container (16z);
- a reward device (17) for issuing a reward to the animal;
- a control device (15) coupled to the sensors (13), the coupling device (18) and the reward device (17);
wherein
- each sensor (13) is designed such that it
- can monitor whether the animal puts its nose into the respective scent opening (12) and,
- provided this is the case, sends a corresponding notification signal to the control device (15);
- the coupling device (18) is designed such that it
- can assume a closed state in which the at least one target scent container (16z) is closed, and
- can assume at least one coupling state in which at least one predetermined target scent container (16z) is opened and fluidically coupled to at least one predetermined scent opening (12);
- the control device (15) is designed such that it
- can activate the coupling device (18) and the reward device (17) in dependence on the notification signals and/or according to a predetermined program.

2. Device (10) according to the preceding claim, wherein
- the coupling device (18) is designed such that it can assume at least two coupling states;
- the program comprises that the control device (15)
- selects one of the coupling states;
- starts a first time measurement at a predetermined first point in time and activates the coupling device (18) such that the coupling device (18) assumes the selected coupling state;
- stops the first time measurement and simultaneously starts a second time measurement as soon as the control device (15) receives the notification signal from one of the sensors (13) associated with the at least one coupled target scent container (16z);
- stops the second time measurement as soon as the control device (15) no longer receives the notification signal from this sensor (13);
- if the duration of the second time measurement exceeds a predetermined threshold value, activates the reward device (17) at a predetermined second point in time after the second time measurement is stopped in such a manner that the reward device (17) issues a predetermined reward.

3. Device (10) according to one or more of the preceding claims, comprising
- a signaling device (38) for generating a signal for the animal;
wherein
- the control device (15) is coupled to the signaling device (38);
- the control device (15) is designed such that it
- can activate the signaling device (38) in dependence on the notification signals and/or according to the program.

4. Device (10) according to one or more of the preceding claims, comprising
- at least one closure surface (19) for the at least one target scent container (16z);
wherein
- the at least one target scent container (16z) has a closable target scent opening (20) surrounded by a sealing edge (20r);
- the coupling device (18) comprises a drive device (22) for the at least one target scent container (16z);
- the drive device (22) is designed such that it
- can move the at least one target scent container (16z) into a first position in which the respective sealing edge (20r) rests completely against the closure surface (19) or against one of the closure surfaces (19) in such a manner that the respective target scent opening (12) is closed;
- can move the at least one target scent container (16z) into a second position in which the respective target scent opening (20) and those scent openings (12) associated with this target scent opening (20) according to the selected coupling state at least partially overlap.

5. Device (10) according to one or more of the preceding claims, comprising
- at least one closable decoy scent container (16v) for receiving a decoy scent substance;
wherein
- the coupling device (18) is a coupling device (18) for the at least one decoy scent container (16v);
- in the closed state, the at least one decoy scent container (16v) is closed;
- in the coupling state or in at least one of the coupling states, at least one predetermined decoy scent container (16) is opened and fluidically coupled to at least one predetermined scent opening (12), and/or in the coupling or at least one of the coupling states, at least one predetermined decoy scent container (16v) is opened and fluidically coupled to at least one predetermined scent opening (12) and the at least one target scent container (16z) is closed.

6. Device (10) according to the preceding claim, comprising
- at least one closure surface (19) for the at least one decoy scent container (16v);
wherein
- the at least one decoy scent container (16v) has a closable decoy scent opening (21) surrounded by a sealing edge (21r);
- the coupling device (18) comprises a drive device (22) for the at least one decoy scent container (16v);
- the drive device (22) is designed such that it
- can move the at least one decoy scent container (16v) into a first position in which the respective sealing edge (21r) can rest completely against the closure surface (19) or one of the closure surfaces (19) in such a manner that the respective decoy scent opening (21) is closed;
- can move the at least one decoy scent container (16v) into a second position in which the respective decoy scent opening (21) and those scent openings (12) which are associated with this decoy scent opening (21) according to the selected coupling state at least partially overlap.

7. Device (10) according to one or more of the preceding claims, comprising
- a temperature control device (31, 32) for at least one of the scent containers (16v, 16z);
wherein
- the control device (15) is coupled to the temperature control device (31, 32);
- the control device (15) is designed such that it
- can activate the temperature control device (31, 32) in dependence on the notification signals and/or according to the program.

8. Device (10) according to one or more of the preceding claims, comprising
- a data memory (39) which is coupled to the control device (15) and in which at least part of the program and/or at least part of the data required by the program and/or at least part of the data processed by the program is stored.

9. Method for scent training an animal, in particular using a device (10) designed according to one or more of claims 1 to 8, wherein
- in a step a
- a housing (11) having a front panel (11f) in which at least two scent openings (12) are formed is provided, and
- at least one closeable target scent container (16z) for receiving a target scent substance is provided;
- in a step b, a target scent substance is filled into the at least one target scent container (16z);
- in a step c, a closed state is created in which the at least one target scent container (16z) is closed;
- in a step d after the step c, a coupling state is created in which at least one predetermined target scent container (16z) is opened and fluidically coupled to at least one predetermined scent opening (12);
- in a step e after said step d, for the at least one coupled scent opening (12)
- it is monitored whether the animal puts its nose into the respective scent opening (12), and
- provided this is the case, a corresponding notification signal is generated;
- in a step f after the step e, the animal is rewarded in dependence on the notification signals and, optionally, a predetermined signal is generated for the animal.

10. Method according to the preceding claim, wherein
- in the step d
- the coupling state is selected from a plurality of predetermined coupling states,
and
- at a predetermined first point in time, a first time measurement is started and the selected coupling state is created;
- in the step e
- the first time measurement is stopped and a second time measurement is started simultaneously as soon as one of the notification signals is generated,
and
- the second time measurement is stopped as soon as this notification signal is no longer generated;
- in the step f, if the duration of the second time measurement exceeds a predetermined threshold, the animal is rewarded in a predetermined manner at a predetermined second point in time after the second time measurement is stopped and, optionally, the signal is generated for the animal.

11. Method according to one or more of claims 9 to 10, wherein
- in the step e, the first time measurement is canceled as soon as a predetermined time period has elapsed without any of the notification signals having been generated.

12. Method according to one or more of claims 9 to 11, wherein
- the results of the time measurements are stored, and/or
- the cancelation of the first time measurement is stored.

13. Method according to one or more of claims 9 to 12, wherein
- in a step g after the step f, a jump is made to the step c or d;
- the number of executions of step g is predetermined and/or limited by a predetermined time period;
- in the step g, the coupling state and/or at least one of the points in time are changed.

14. Method according to one or more of claims 9 to 13, wherein
- in the step a, at least one closable decoy scent container (16v) for receiving a decoy scent substance is provided;
- in step b, a decoy scent substance is filled into the at least one decoy scent container (16v);
- in the closed state, the at least one decoy scent container (16v) is closed;
- in the coupling state, at least one predetermined decoy scent container (16v) is opened and fluidically coupled to at least one predetermined scent opening (12); and/or in the coupling state, at least one predetermined decoy scent container (16v) is opened and fluidically coupled to at least one predetermined scent opening (12) and the at least one target scent container (16z) is closed.

15. Method according to one or more of claims 9 to 14, wherein
- prior to step d or prior to the first point in time, at least one of the scent containers (16v, 16z) is brought to a predetermined temperature.

## Revendications

1. Dispositif (10) pour le dressage olfactif d'un animal, comprenant
- un boîtier (11) avec une plaque frontale (11f), dans laquelle sont formées au moins deux ouvertures (12) à odeur ;
- au moins un capteur (13) pour chaque ouverture (12) à odeur ;
- au moins un récipient (16z) d'odeur cible pouvant être fermé et destiné à recevoir une substance odorante cible ;
- un dispositif de couplage (18) pour le au moins un récipient (16z) d'odeur cible ;
- un dispositif de récompense (17) pour distribuer une récompense audit animal ;
- un dispositif de commande (15) couplé auxdits capteurs (13), audit dispositif de couplage (18) et audit dispositif de récompense (17) ;
dans lequel
- chaque capteur (13) est conçu de telle manière qu'il
- peut surveiller si ledit animal met son nez dans ladite ouverture (12) à odeur respective, et
- tant que c'est le cas, il envoie un signal d'avertissement correspondant au dispositif de commande (15) ;
- ledit dispositif de couplage (18) est conçu de telle sorte qu'il
- peut prendre un état de fermeture dans lequel ledit au moins un récipient (16z) d'odeur cible est fermé, et que
- peut prendre au moins un état de couplage dans lequel au moins un récipient (16z) d'odeur cible prédéterminé est ouvert et couplé de manière fluide à au moins une ouverture (12) à odeur prédéterminée ;
- ledit dispositif de commande (15) est conçu de telle sorte qu'il
- peut commander ledit dispositif de couplage (18) et ledit dispositif de récompense (17) en fonction desdits signaux d'avertissement et/ou selon un programme prédéterminé.

2. Dispositif (10) selon la revendication précédente, dans lequel
- ledit dispositif de couplage (18) est conçu de manière à pouvoir prendre au moins deux états de couplage ;
- ledit programme comprend le fait que ledit dispositif de commande (15)
- sélectionne l'un desdits états de couplage ;
- démarre une première mesure de temps à un premier moment prédéterminé et commande ledit dispositif de couplage (18) de telle sorte que ledit dispositif de couplage (18) adopte ledit état de couplage sélectionné ;
- arrête ladite première mesure de temps et démarre simultanément une deuxième mesure de temps dès que ledit dispositif de commande (15) reçoit ledit signal d'avertissement de l'un desdits capteurs (13) qui sont associés à au moins un récipient (16z) d'odeur cible prédéterminé couplé ;
- arrête ladite deuxième mesure du temps, dès que ledit dispositif de commande (15) ne reçoit plus ledit signal d'avertissement de ce capteur (13) ;
- commande ledit dispositif de récompense (17), si la durée de ladite deuxième mesure du temps dépasse une valeur seuil prédéterminée, à un deuxième moment prédéterminé après l'arrêt de ladite deuxième mesure du temps, de telle sorte que ledit dispositif de récompense (17) distribue une récompense prédéterminée.

3. Dispositif (10) selon l'une ou plusieurs des revendications précédentes, comprenant
- un dispositif de signalisation (38) pour générer un signal pour ledit animal ; dans lequel
- ledit dispositif de commande (15) est couplé audit dispositif de signalisation (38) ;
- ledit dispositif de commande (15) est conçu de telle sorte qu'il
- peut commander ledit dispositif de signalisation (38) en fonction des signaux d'avertissement et/ou conformément audit programme.

4. Dispositif (10) selon l'une ou plusieurs des revendications précédentes, comprenant
- au moins une surface de fermeture (19) pour ledit au moins un récipient (16z) d'odeur cible;
dans lequel
- ledit au moins un récipient (16z) d'odeur cible présente une ouverture d'odeur cible (20) pouvant être fermée, qui est entourée par un bord d'étanchéité (20r) ;
- ledit dispositif de couplage (18) comprend un dispositif d'entraînement (22) pour ledit au moins un récipient (16z) d'odeur cible;
- ledit dispositif d'entraînement (22) est conçu de telle sorte qu'il
- peut déplacer ledit au moins un récipient (16z) d'odeur cible dans une première position dans laquelle ledit bord d'étanchéité respectif (20r) s'applique complètement contre ladite surface de fermeture (19) ou contre l'une desdites surfaces de fermeture (19) de telle sorte que ladite ouverture d'odeur cible respective (20) soit fermée ;
- peut déplacer ledit au moins un récipient (16z) d'odeur cible dans une deuxième position dans laquelle ladite ouverture d'odeur cible respective (20) et lesdites ouvertures (12) à odeur qui sont associées à cette ouverture d'odeur cible (20) selon ledit état de couplage sélectionné se chevauchent au moins partiellement.

5. Dispositif (10) selon une ou plusieurs des revendications précédentes, comprenant
- au moins un récipient (16v) d'odeur d'incitation pouvant être fermé pour contenir une substance odorante d'incitation ;
dans lequel
- ledit dispositif de couplage (18) est un dispositif de couplage (18) pour ledit au moins un récipient (16v) d'odeur d'incitation;
- dans ledit état fermé, ledit au moins un récipient (16v) d'odeur d'incitation est fermé ;
- dans ledit état de couplage ou dans au moins l'un desdits états de couplage, au moins un récipient (16v) d'odeur d'incitation prédéterminé est ouvert et couplé de manière fluide à ladite au moins une ouverture (12) à odeur prédéterminée, et/ou dans ledit état de couplage ou dans au moins l'un desdits états de couplage, au moins un récipient (16v) d'odeur d'incitation prédéterminé est ouvert et couplé de manière fluide à au moins une ouverture (12) à odeur prédéterminée et ledit au moins un récipient(16z) d'odeur cible est fermé.

6. Dispositif (10) selon la revendication précédente, comprenant
- au moins une surface de fermeture (19) pour ledit au moins un récipient (16v) d'odeur d'incitation ;
dans lequel
- ledit au moins un récipient (16v) d'odeur d'incitation présente une ouverture (21) d'odeur d'incitation pouvant être fermée, qui est entourée par un bord d'étanchéité (21r) ;
- ledit dispositif de couplage (18) comprend un dispositif d'entraînement (22) pour ledit au moins un récipient (16v) d'odeur d'incitation;
- ledit dispositif d'entraînement (22) est conçu de telle sorte qu'il
- peut déplacer ledit au moins un récipient (16v) d'odeur d'incitation dans une première position dans laquelle ledit bord d'étanchéité respectif (21r) s'applique complètement contre ladite surface de fermeture (19) ou contre l'une desdites surfaces de fermeture (19) de telle sorte que l'ouverture à odeur d'incitation respective (21) soit fermée ;
- peut déplacer ledit au moins un récipient (16v) à odeur de transfert dans une deuxième position dans laquelle ladite ouverture à odeur d'incitation respective (21) et les ouvertures (12) à odeur qui sont associées à cette ouverture à odeur d'incitation (21) selon ledit état de couplage sélectionné se chevauchent au moins partiellement.

7. Dispositif (10) selon l'une ou plusieurs des revendications précédentes, comprenant
- un dispositif de régulation de température (31, 32) pour au moins l'un desdits récipients (16v, 16z) d'odeur;
dans lequel
- ledit dispositif de commande (15) est couplé audit dispositif de régulation de température (31, 32) ;
- ledit dispositif de commande (15) est conçu de telle sorte qu'il
- peut commander ledit dispositif de régulation de température (31, 32) en fonction desdits signaux d'avertissement et/ou conformément audit programme.

8. Dispositif (10) selon l'une ou plusieurs des revendications précédentes, comprenant
- une mémoire de données (39) qui est couplée audit dispositif de commande (15) et dans laquelle est stockée au moins une partie dudit programme et/ou au moins une partie des données requises par ledit programme et/ou au moins une partie des données traitées par ledit programme.

9. Procédé de dressage olfactif d'un animal, notamment en utilisant un dispositif (10) configuré selon une ou plusieurs des revendications 1 à 8, dans lequel
- lors d'une étape a
- un boîtier (11) avec une plaque frontale (11f), dans laquelle sont formées au moins deux ouvertures (12) à odeur, est mis à disposition, et
- au moins un récipient (16z) d'odeur cible pouvant être fermé est mis à disposition pour recevoir une substance odorante cible ;
- lors d'une étape b, on remplit ledit au moins un récipient (16z) d'odeur cible d'une substance odorante cible ;
- lors d'une étape c, un état de fermeture est établi dans lequel ledit au moins un récipient (16z) d'odeur cible est fermé ;
- lors d'une étape d'après ladite étape c, un état de couplage est établi dans lequel au moins un récipient (16z) d'odeur cible prédéterminé est ouvert et couplé de manière fluide à au moins une ouverture (12) à odeur prédéterminée ;
- lors d'une étape e après ladite étape d pour l'au moins une ouverture (12) à odeur couplée
- il est observé si ledit animal met son nez dans ladite ouverture (12) à odeur respective, et
- tant que c'est le cas, un signal d'avertissement correspondant est généré ;
- dans une étape f suivant ladite étape e, ledit animal est récompensé en fonction des signaux d'avertissement et, en option, un signal prédéterminé est généré pour ledit animal.

10. Procédé selon la revendication précédente, dans lequel
- lors de ladite étape d
- ledit état de couplage est sélectionné parmi une pluralité d'états de couplage prédéterminés, et
- à un premier moment prédéterminé, une première mesure de temps est lancée et ledit état de couplage sélectionné est établi ;
- lors de ladite étape e
- ladite première mesure de temps est arrêtée et une deuxième mesure de temps est lancée simultanément dès que l'un des signaux d'avertissement est généré,
et
- ladite deuxième mesure de temps est arrêtée dès que ce signal d'avertissement n'est plus généré ;
- lors de ladite étape f, si la durée de ladite deuxième mesure de temps dépasse une valeur de seuil prédéterminée, à un deuxième moment prédéterminé après l'arrêt de ladite deuxième mesure de temps, ledit animal est récompensé d'une manière prédéterminée et, en option, ledit signal est généré pour ledit animal.

11. Procédé selon l'une ou plusieurs des revendications 9 à 10, dans lequel
- lors de ladite étape e, ladite première mesure de temps est interrompue dès qu'un laps de temps prédéterminé s'est écoulé sans qu'aucun desdits signaux d'avertissement n'ait été généré.

12. Procédé selon l'une ou plusieurs des revendications 9 à 11, dans lequel
- les résultats desdites mesures de temps sont enregistrés, et/ou
- l'arrêt de ladite première mesure de temps est mémorisée.

13. Procédé selon une ou plusieurs des revendications 9 à 12, dans lequel
- lors d'une étape g, ladite étape f est suivie de ladite étape c ou d ;
- le nombre d'exécutions de ladite étape g est prédéterminé et/ou limité par un laps de temps prédéterminée ;
- lors de ladite étape g, ledit état de couplage et/ou au moins l'un desdits moments est modifié.

14. Procédé selon l'une ou plusieurs des revendications 9 à 13, dans lequel
- lors de ladite étape a, on fournit au moins un récipient d'odeur d'incitation (16v) pouvant être fermé pour recevoir une substance odorante d'incitation ;
- lors de ladite étape b, un agent odorant d'incitation est introduit dans ledit au moins un récipient (16v) d'odeur d'incitation ;
- dans ledit état de fermeture, ledit au moins un récipient (16v) d'odeur de d'incitation est fermé ;
- dans ledit état de couplage, au moins un récipient (16v) d'odeur de déviation prédéterminé est ouvert et couplé de manière fluide à au moins une ouverture (12) à odeur prédéterminée, et/ou dans ledit état de couplage, au moins un récipient (16v) d'odeur d'incitation prédéterminé est ouvert et couplé de manière fluide à au moins une ouverture (12) à odeur prédéterminée et ledit au moins un récipient (16z) d'odeur cible est fermé.

15. Procédé selon une ou plusieurs des revendications 9 à 14, dans lequel
- avant ladite étape d ou avant ledit premier moment, au moins un desdits récipients (16v, 16z) d'odeur est porté à une température prédéterminée.
